(19) Europäisches Patentamt
European Patent Office
Office européen des brevets

(11) **EP 4 275 932 A1**

(12) **EUROPEAN PATENT APPLICATION**
published in accordance with Art. 153(4) EPC

(43) Date of publication:
**15.11.2023 Bulletin 2023/46**

(21) Application number: **22736751.3**

(22) Date of filing: **05.01.2022**

(51) International Patent Classification (IPC):
**B60J 1/00** (2006.01)          **G02B 5/22** (2006.01)

(52) Cooperative Patent Classification (CPC):
**B60J 1/00; G02B 5/22**

(86) International application number:
**PCT/JP2022/000143**

(87) International publication number:
**WO 2022/149583 (14.07.2022 Gazette 2022/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.01.2021 JP 2021001627**

(71) Applicant: **AGC INC.**
**Chiyoda-ku,**
**Tokyo 1008405 (JP)**

(72) Inventors:
• **NAGASHIMA, Tatsuo**
  **Tokyo 100-8405 (JP)**
• **KOBAYASHI, Mitsuyoshi**
  **Tokyo 100-8405 (JP)**
• **YASUI, Yoji**
  **Tokyo 100-8405 (JP)**
• **KITAOKA, Kenji**
  **Tokyo 100-8405 (JP)**

(74) Representative: **Müller-Boré & Partner**
**Patentanwälte PartG mbB**
**Friedenheimer Brücke 21**
**80639 München (DE)**

(54) **GLASS FOR VEHICLE**

(57)    A decrease in the detection accuracy of infrared rays is suppressed. Vehicle glass includes a light shielding region in which a far-infrared ray transmitting region is formed, the far-infrared ray transmitting region including an opening and a far-infrared ray transmitting member (20) disposed in the opening. In the far-infrared ray transmitting member (20), the average transmittance of far-infrared rays having wavelengths of 8 $\mu$m to 13 $\mu$m at a first position (P1) in a case where the far-infrared rays are emitted in a direction perpendicular to a surface (20a) on a vehicle exterior side is different from the average transmittance of the far-infrared rays having wavelengths of 8 $\mu$m to 13 $\mu$m at a second position (P2) that is lower than the first position (P1) in the vertical direction in a case where the vehicle glass is mounted to a vehicle.

FIG.6

EP 4 275 932 A1

**Description**

Field

The present invention relates to vehicle glass. Background

In recent years, there are cases where various sensors are attached for the purpose of improving the safety of automobiles. Examples of the sensors attached to an automobile include a camera, light detecting and ranging (LiDAR), a millimeter wave radar, and an infrared sensor.

Infrared rays are classified into near-infrared (e.g. wavelengths of 0.7 $\mu$m to 2 $\mu$m), mid-infrared (e.g. wavelengths of 3 $\mu$m to 5 $\mu$m), and far-infrared (e.g. wavelengths of 8 $\mu$m to 13 $\mu$m) depending on their wavelength bands. Examples of infrared sensors that detect these infrared rays include a touch sensor, a near-infrared camera, and LiDAR for near-infrared, gas analysis and mid-infrared spectroscopic analysis (functional group analysis) for mid-infrared, and night vision and a thermoviewer (hereinafter, far-infrared camera) for far-infrared.

Since window glass panes of an automobile usually does not transmit the far-infrared rays having wavelengths of 8 $\mu$m to 13 $\mu$m, a far-infrared camera is installed outside a vehicle compartment in the related art as in Patent Literature, 1 for example, more specifically, in a front grille. However, in a case where a far-infrared camera is installed outside a vehicle compartment, the structure becomes more complicated in order to ensure robustness, water resistance, dust resistance, and the like, which leads to high cost. Installing a far-infrared camera in a compartment, especially in the operating area of wipers, allows the far-infrared camera to be protected by the windshield glass, whereby such a disadvantage can be solved. However, as described above, since the window glass panes have a disadvantage of low far-infrared ray transmittance, the far-infrared cameras are not usually disposed in a vehicle compartment.

In order to meet the above demand, Patent Literature 2 discloses a window member in which a through hole is formed in a part of a window glass pane and the through hole is filled with an infrared ray transmitting member.

Citation List

Patent Literature

    Patent Literature 1: US 2003/0169491 A1
    Patent Literature 2: GB 2271139 A

Summary

Technical Problem

Meanwhile, there are cases where the transmittance of infrared rays at individual positions of an infrared ray transmitting member is non-uniform due to a reason such as that the vehicle glass is mounted to be inclined with respect to the vertical direction. In this case, the detection accuracy by an infrared camera may be deteriorated. Therefore, it is required to suppress a decrease in the detection accuracy of infrared rays.

The present invention has been made in view of the above disadvantage, and an object of the present invention is to provide vehicle glass capable of suppressing a decrease in the detection accuracy of infrared rays.

Solution to Problem

To solve the problem above, a vehicle glass of the present disclosure comprises a light shielding region, wherein a far-infrared ray transmitting region is formed in the light shielding region, the far-infrared ray transmitting region including an opening and a far-infrared ray transmitting member disposed in the opening, and in the far-infrared ray transmitting member, an average transmittance of far-infrared rays having wavelengths of 8 $\mu$m to 13 $\mu$m at a first position in a case where the far-infrared rays are emitted in a direction perpendicular to a surface on a vehicle exterior side is different from an average transmittance of the far-infrared rays having wavelengths of 8 $\mu$m to 13 $\mu$m at a second position that is lower than the first position in a vertical direction in a case where the vehicle glass is mounted to a vehicle.

Advantageous Effects of Invention

According to the present invention, it is possible to suppress a decrease in the detection accuracy of infrared rays.

Brief Description of Drawings

FIG. 1 is a schematic diagram illustrating a state in which vehicle glass according to the present embodiment is mounted to a vehicle.
FIG. 2 is a schematic plan view of the vehicle glass of the present embodiment.
FIG. 3 is a cross-sectional view taken along line A-A in FIG. 2.
FIG. 4 is a cross-sectional view taken along line B-B in FIG. 2.
FIG. 5 is a schematic diagram illustrating an example of a state in which vehicle glass is mounted to a vehicle.
FIG. 6 is a schematic cross-sectional view of a far-infrared ray transmitting member according to a first embodiment.
FIG. 7 is a schematic cross-sectional view of a far-infrared ray transmitting member according to another example of the first embodiment.
FIG. 8 is a schematic cross-sectional view of a far-infrared ray transmitting member according to the other example of the first embodiment.
FIG. 9 is a schematic cross-sectional view of a far-infrared ray transmitting member according to a first modification.
FIG. 10 is a schematic cross-sectional view of a far-infrared ray transmitting member according to another example of the first modification.
FIG. 11 is a schematic cross-sectional view of a far-infrared ray transmitting member according to a second modification.
FIG. 12 is a schematic cross-sectional view of a far-infrared ray transmitting member according to another example of the second modification.
FIG. 13 is a schematic cross-sectional view of a far-infrared ray transmitting member according to a second embodiment.
FIG. 14 is a schematic cross-sectional view of a far-infrared ray transmitting member according to another example of the second embodiment.

Description of Embodiments

Hereinafter, preferred embodiments of the present invention will be described in detail with reference to the accompanying drawings. Note that the present invention is not limited by the embodiments, and in a case where there is a plurality of embodiments, those obtained by combining embodiments are also included. Incidentally, numerical values include a range obtained from rounding.

(First Embodiment)

(Vehicle)

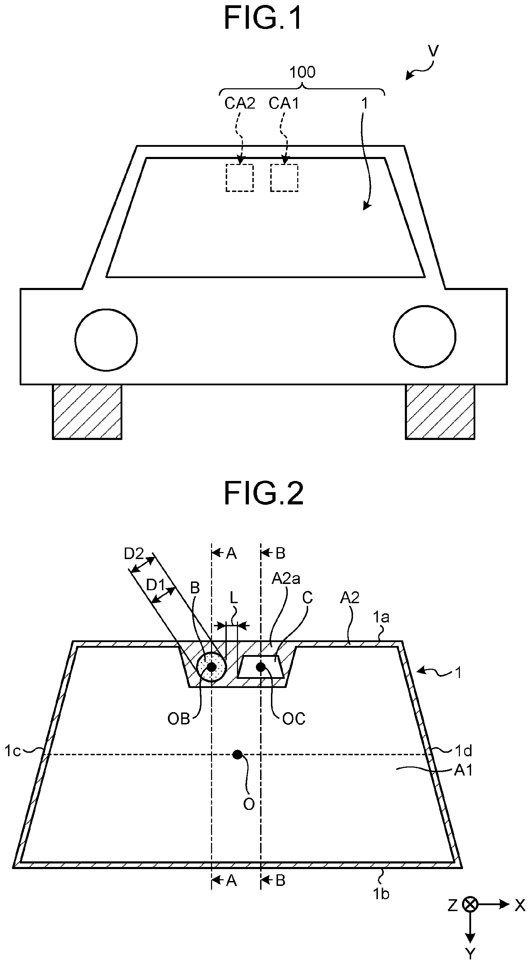

FIG. 1 is a schematic diagram illustrating a state in which vehicle glass according to the present embodiment is mounted to a vehicle. As illustrated in FIG. 1, vehicle glass 1 of the present embodiment is mounted to a vehicle V. The vehicle glass 1 is a window member applied to a windshield of the vehicle V. That is, the vehicle glass 1 is used as a windshield of the vehicle V, in other words, as windshield glass. A far-infrared camera CA1 and a visible light camera CA2 are mounted inside (vehicle interior) the vehicle V. Note that the inside of the vehicle V (vehicle interior) refers to, for example, the inside of a compartment in which a driver's seat is provided.

The vehicle glass 1, the far-infrared camera CA1, and the visible light camera CA2 constitute a camera unit 100 of the present embodiment. The far-infrared camera CA1 detects far-infrared rays and captures a thermal image of the outside of the vehicle V by detecting far-infrared rays from the outside of the vehicle V. The visible light camera CA2 is a camera that detects visible light and captures an image outside the vehicle V by detecting visible light from the outside of the vehicle V. Note that the camera unit 100 may further include, for example, a LiDAR or a millimeter wave radar in addition to the far-infrared camera CA1 and the visible light camera CA2. Incidentally, the far-infrared rays are, for example, an electromagnetic wave having a wavelength band of 8 $\mu$m to 13 $\mu$m, and the visible light is, for example, an electromagnetic wave having a wavelength band of 360 nm to 830 nm. Note that the far-infrared rays may be an electromagnetic wave having a wavelength band of 8 $\mu$m to 12 $\mu$m. In addition, a numerical range represented using "to" means a range including numerical values specified before and after "to" as a lower limit value and an upper limit value.

(Vehicle Glass)

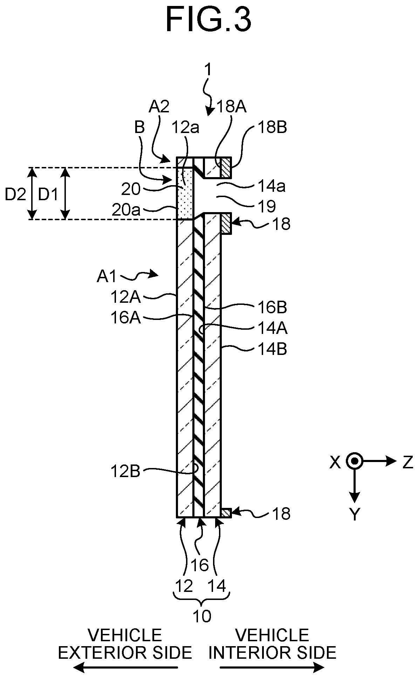

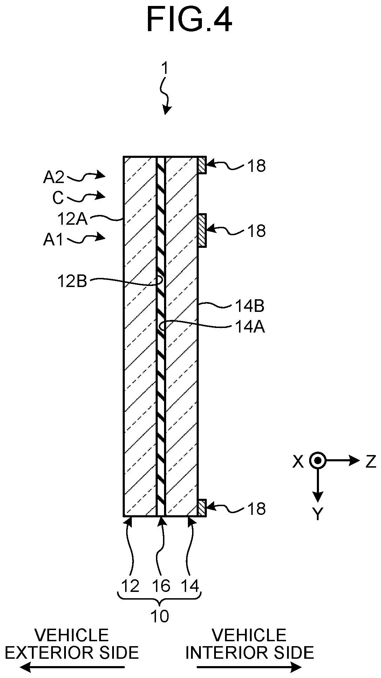

FIG. 2 is a schematic plan view of vehicle glass of a first embodiment. FIG. 3 is a cross-sectional view taken along line A-A in FIG. 2. FIG. 4 is a cross-sectional view taken along line B-B in FIG. 2. As illustrated in FIG. 2, hereinafter, an upper edge of the vehicle glass 1 is referred to as an upper edge portion 1a, a lower edge a lower edge portion 1b, a first side edge a side edge portion 1c, and a second side edge a side edge portion 1d. The upper edge portion 1a is an edge portion located on the vertically upper side when the vehicle glass 1 is mounted to the vehicle V. The lower edge portion 1b is an edge portion positioned on the vertically lower side when the vehicle glass 1 is mounted to the vehicle V. The side edge portion 1c is an edge portion located on a first side when the vehicle glass 1 is mounted to the vehicle V. The side edge portion 1d is an edge portion located on a second side when the vehicle glass 1 is mounted to the vehicle V.

Hereinafter, among directions parallel to a surface of the vehicle glass 1, a direction from the upper edge portion 1a toward the lower edge portion 1b is defined as a Y direction, and a direction from the side edge portion 1c toward the side edge portion 1d is defined as an X direction. In the present embodiment, the X direction and the Y direction are orthogonal to each other. A direction orthogonal to the surface of the vehicle glass 1, that is, a thickness direction of the vehicle glass 1 is defined as a Z direction. The Z direction is, for example, a direction from the exterior of the vehicle V toward the interior of the vehicle V when the vehicle glass 1 is mounted to the vehicle V. The X direction and the Y direction are along the surface of the vehicle glass 1 but may be in contact with the surface of the vehicle glass 1 at a center point O of the vehicle glass 1, for example, in a case where the surface of the vehicle glass 1 is a curved surface. The center point O is the center position of the vehicle glass 1 as viewed from the Z direction.

A light transmitting region A1 and a light shielding region A2 are formed in the vehicle glass 1. The light transmitting region A1 occupies the central portion of the vehicle glass 1 when viewed from the Z direction. The light transmitting region A1 is a region for securing the visual field of a driver. The light transmitting region A1 transmits visible light. The light shielding region A2 is formed around the light transmitting region A1 when viewed from the Z direction. The light shielding region A2 shields visible light. In the light shielding region A2, a far-infrared ray transmitting region B and a visible light transmitting region C are formed in a light shielding region A2a that is a portion on the upper edge portion 1a side.

The far-infrared ray transmitting region B transmits far-infrared rays and is provided with the far-infrared camera CA1. That is, the far-infrared camera CA1 is provided at a position overlapping the far-infrared ray transmitting region B when viewed from an optical axis direction of the far-infrared camera CA1. The visible light transmitting region C transmits visible light and is provided with the visible light camera CA2. That is, the visible light camera CA2 is provided at a position overlapping the visible light transmitting region C when viewed from an optical axis direction of the visible light camera CA2.

As described above, since the far-infrared ray transmitting region B and the visible light transmitting region C are formed in the light shielding region A2, the light shielding region A2 shields far-infrared rays in a region other than the region where the far-infrared ray transmitting region B is formed and shields visible light in a region other than the region where the visible light transmitting region C is formed. The light shielding region A2a is formed around the far-infrared ray transmitting region B and the visible light transmitting region C. This is preferable since providing the light shielding region A2a in the periphery in the above manner allows various sensors to be protected from sunlight. This is also preferable from the viewpoint of designability since wiring of the various sensors is not visible from the outside of the vehicle.

As illustrated in FIG. 3, the vehicle glass 1 includes a glass base body 12 (first glass base body), a glass base body 14 (second glass base body), a middle layer 16, and a light shielding layer 18. In the vehicle glass 1, the glass base body 12, the middle layer 16, the glass base body 14, and the light shielding layer 18 are laminated in this order in the Z direction. The glass base body 12 and the glass base body 14 are fixed (bonded) to each other with the middle layer 16 interposed therebetween.

As the glass base bodies 12 and 14, for example, soda-lime glass, borosilicate glass, aluminosilicate glass, or the like can be used. The middle layer 16 is a bonding layer for bonding the glass base body 12 and the glass base body 14. As the middle layer 16, for example, a polyvinyl butyral (hereinafter also referred to as PVB) modified material, an ethylene-vinyl acetate copolymer (EVA)-based material, a urethane resin material, a vinyl chloride resin material, or the like can be used. More specifically, the glass base body 12 includes a first surface 12A and a second surface 12B, and the second surface 12B is fixed (bonded) to the middle layer 16 in contact with a first surface 16A of the middle layer 16. The glass base body 14 includes a first surface 14A and a second surface 14B, and the first surface 14A is fixed (bonded) to the middle layer 16 in contact with a second surface 16B of the middle layer 16. As described above, the vehicle glass 1 is a laminated glass in which the glass base body 12 and the glass base body 14 are laminated. However, the vehicle glass 1 is not limited to laminated glass and may include, for example, only one of the glass base body 12 and the glass base body 14. In this case, the middle layer 16 may not be included either. Hereinafter, in a case where the glass base bodies 12 and 14 are not distinguished from each other, they are referred to as a glass base body 10.

The light shielding layer 18 includes a first surface 18A and a second surface 18B, and the first surface 18A is fixed to the second surface 14B of the glass base body 14 in contact therewith. The light shielding layer 18 shields visible light. As the light shielding layer 18, for example, a ceramics light shielding layer or a light shielding film can be used.

As the ceramics light shielding layer, for example, a ceramics layer made of a conventionally known material such as a black ceramics layer can be used. As the light shielding film, for example, a light shielding polyethylene terephthalate (PET) film, a light shielding polyethylene naphthalate (PEN) film, a light shielding polymethyl methacrylate (PMMA) film, or the like can be used.

In the present embodiment, in the vehicle glass 1, a side on which the light shielding layer 18 is provided faces the inside (interior) of the vehicle V, and a side on which the glass base body 12 is provided faces the outside (exterior) of the vehicle V. However, it is not limited thereto, and the light shielding layer 18 may be on the outside of the vehicle V. In a case where the glass base bodies 12 and 14 constitute laminated glass, the light shielding layer 18 may be formed between the glass base body 12 and the glass base body 14.

(Light shielding Region)

The light shielding region A2 is formed by providing the light shielding layer 18 on the glass base body 10. That is, the light shielding region A2 is a region in which the glass base body 10 includes the light shielding layer 18. That is, the light shielding region A2 is a region in which the glass base body 12, the middle layer 16, the glass base body 14, and the light shielding layer 18 are laminated. Meanwhile, the light transmitting region A1 is a region in which the glass base body 10 is not provided with the light shielding layer 18. That is, the light transmitting region A1 is a region where the glass base body 12, the middle layer 16, and the glass base body 14 are laminated but the light shielding layer 18 is not laminated.

(Far-infrared Ray Transmitting Region)

As illustrated in FIG. 3, the vehicle glass 1 has an opening 19 penetrating from a first surface (in this example, the surface 12A) to a second surface (in this example, the surface 14B) in the Z direction. A far-infrared ray transmitting member 20 is provided in the opening 19. A region where the opening 19 is formed and the far-infrared ray transmitting member 20 is provided is the far-infrared ray transmitting region B. That is, the far-infrared ray transmitting region B is a region where the opening 19 and the far-infrared ray transmitting member 20 arranged in the opening 19 are provided. Since the light shielding layer 18 does not transmit far-infrared rays, the far-infrared ray transmitting region B is not provided with the light shielding layer 18. That is, in the far-infrared ray transmitting region B, the glass base body 12, the middle layer 16, the glass base body 14, and the light shielding layer 18 are not provided, and the far-infrared ray transmitting member 20 is provided in the opening 19 that is formed. The far-infrared ray transmitting member 20 will be described later. It can be said that the vehicle glass 1 includes a glass base body 10 and the far-infrared ray transmitting member 20 provided in the opening 19 of the glass base body 10. The glass base body 10 can also be referred to as a portion constituting a window glass pane in the vehicle glass 1. For example, in this example, a structure including the glass base bodies 12 and 14, the middle layer 16, and the light shielding layer 18 may be referred to as the glass base body 10. However, as described above, the glass base body 10 may include at least only one of the glass base body 12 and the glass base body 14.

(Visible Light Region)

As illustrated in FIG. 4, the visible light transmitting region C is a region in which the glass base body 10 is not provided with the light shielding layer 18 in the Z direction, similarly to the light transmitting region A1. That is, the visible light transmitting region C is a region where the glass base body 12, the middle layer 16, and the glass base body 14 are laminated but the light shielding layer 18 is not laminated.

As illustrated in FIG. 2, the visible light transmitting region C is preferably disposed in the vicinity of the far-infrared ray transmitting region B. Specifically, the center of the far-infrared ray transmitting region B viewed from the Z direction is defined as a center point OB, and the center of the visible light transmitting region C viewed from the Z direction is defined as a center point OC. Defining the shortest distance between the far-infrared ray transmitting region B (opening 19) and the visible light transmitting region C when viewed from the Z direction as a distance L, the distance L is preferably more than 0 mm and less than or equal to 100 mm and, more preferably, within a range of 10 mm to 80 mm. By positioning the visible light transmitting region C within this range with respect to the far-infrared ray transmitting region B, it is made possible to capture an image at a close position by the far-infrared camera CA1 and the visible light camera CA2, and it is also made possible to appropriately capture an image by the visible light camera CA2 while suppressing the amount of perspective distortion in the visible light transmitting region C. By capturing images at a close position by the far-infrared camera CA1 and the visible light camera CA2, a load for performing arithmetic processing on data obtained from the cameras is reduced, and handling of a power supply or a signal cable also becomes suitable.

As illustrated in FIG. 2, the visible light transmitting region C and the far-infrared ray transmitting region B are preferably positioned side by side in the X direction. That is, it is preferable that the visible light transmitting region C is not located on the Y direction side of the far-infrared ray transmitting region B but is arranged side by side with the far-infrared ray transmitting region B in the X direction. By arranging the visible light transmitting region C side by side with the far-infrared ray transmitting region B in the X direction, the parallax between the far-infrared camera and the visible light camera can be reduced as much as possible, the object recognition rate of an object is improved, and the visible light transmitting region C can be disposed in the vicinity of the upper edge portion 1a. This can secure the visual field of the driver in the light transmitting region A1 appropriately. Note that being positioned side by side in the X direction means being within a range of ± 50 mm in the Y direction.

(Infrared Ray Transmitting Member)

Hereinafter, the far-infrared ray transmitting member 20 provided in the far-infrared ray transmitting region B will be specifically described. The far-infrared ray transmitting member 20 transmits far-infrared rays. As illustrated in FIG. 3, it is preferable that the far-infrared ray transmitting member 20 is formed in such a manner that a surface on the vehicle exterior side is formed to be flush (continuous) with a surface of the light shielding region A2 on the vehicle exterior side. In other words, the surface 20A of the far-infrared ray transmitting member 20 on the vehicle exterior side is mounted so as to be continuous with the surface 12A of the glass base body 12. As described above, with a surface 20A of the far-infrared ray transmitting member 20 being continuous with the surface 12A of the glass base body 12, it is possible to suppress impairment of the wiping effect of wipers. This also makes it possible to suppress the risks such as that the present of a step impairs the designability as the vehicle V and that dust or the like accumulates on a step. Furthermore, the far-infrared ray transmitting member 20 is preferably molded so as to match the curved surface shape of the vehicle glass 1 that is applied. Although the method for molding the far-infrared ray transmitting member 20 is not particularly limited, polishing or molding is selected depending on the curved surface shape or the member.

Although the shape of the far-infrared ray transmitting member 20 is not particularly limited, it is preferable to have a plate-like shape matching the shape of the opening 19. That is, for example in a case where the opening 19 is circular, the far-infrared ray transmitting member 20 preferably has a disk shape (columnar shape). In addition, from the viewpoint of designability, the surface shape of the far-infrared ray transmitting member 20 on the vehicle exterior side may be processed so as to match the curvature of the outer surface shape of the glass base body 12. Furthermore, the far-infrared ray transmitting member 20 may have a lens shape for reasons such as achieving both widening of the viewing angle of the far-infrared camera CA1 and improvement of mechanical characteristics. Such a structure is preferable since the far-infrared light can be efficiently condensed even in a case where the area of the far-infrared ray transmitting member 20 is small. In this case, the number of far-infrared ray transmitting members 20 having a lens-shape is preferably one to three, and typically preferably two. Furthermore, it is particularly preferable that the far-infrared ray transmitting member 20 having a lens shape is aligned in advance and modularized and is integrated with a housing or a bracket for bonding the far-infrared camera CA1 to the vehicle glass 1.

In the vehicle glass 1 of the present embodiment, it is preferable that the area of the opening 19 on the surface on the vehicle interior side is smaller than the area of the opening 19 on the surface on the vehicle exterior side and that, also for the shape of the far-infrared ray transmitting member 20, the area of the surface on the vehicle interior side is smaller than the area of the surface on the vehicle exterior side. With such a structure, strength against impact from the vehicle exterior side is improved. Furthermore, in a case where the vehicle glass 1 of the present embodiment is laminated glass including the glass base body 12 (on the vehicle exterior side) and the glass base body 14 (on the vehicle interior side), the opening 19 is formed by the opening 12a of the glass base body 12 and the opening 14a of the glass base body 14 overlapping with each other. In this case, it is only required that the area of the opening 12a of the glass base body 12 is made larger than the area of the opening 14a of the glass base body 14 and that the far-infrared ray transmitting member 20 adjusted to the size of the opening 12a of the glass base body 12 is disposed inside the opening 12a of the glass base body 12.

Furthermore, as illustrated in FIG. 3, in the far-infrared ray transmitting member 20, it is preferable that the length D1 of the longest straight line among straight lines connecting any two points on a surface on the vehicle exterior side is less than or equal to 80 mm. The length D1 is more preferably less than or equal to 70 mm and still more preferably, less than or equal to 65 mm. The length D1 is preferably greater than or equal to 40 mm. The length D1 is more preferably greater than or equal to 50 mm and, still more preferably, greater than or equal to 60 mm. Furthermore, as illustrated in FIG. 3, in the opening 19 of the far-infrared ray transmitting region B, a length D2 of the longest straight line among straight lines connecting any two points on the surface on the vehicle exterior side (in this case, any two points on an edge of a portion opened on the surface 12A side of the opening 19) is preferably less than or equal to 80 mm. The length D2 is more preferably less than or equal to 70 mm and still more preferably, less than or equal to 65 mm. The length D2 is preferably greater than or equal to 40 mm. The length D2 is more preferably greater than or equal to 50 mm and, still more preferably, greater than or equal to 60 mm. The length D2 can also be said to be the length of the longest straight line among straight lines connecting any two points on the outer periphery of the opening 19 on the surface (surface 12A) of the vehicle glass 1 on the vehicle exterior side. By setting the length D1 of the far-infrared ray transmitting member 20 or the length D2 of the opening 19 within these ranges, it is made possible to suppress a decrease in the strength of the vehicle glass 1 and also to suppress the amount of perspective distortion around the opening 19. Note that the lengths D1 and D2 correspond to the diameter of the surface on the exterior of the vehicle in a case where the shape of the surface on the exterior of the vehicle of the far-infrared ray transmitting member 20 is round. In addition, the lengths D1 and D2 in this case refer to lengths in a state where the vehicle glass 1 is mounted to the vehicle V, and for example in a case where the glass is bent into a shape to be mounted to the vehicle V, the lengths D1 and D2 are lengths in a state after the bending. The same applies to the description of dimensions and positions other than the lengths D1 and D2 unless otherwise specified.

In addition, the far-infrared ray transmitting member 20 may be provided with a frame member at an outer peripheral edge and be attached to the opening 19 via the frame member.

(Transmittance of Far-infrared Ray Transmitting Member)

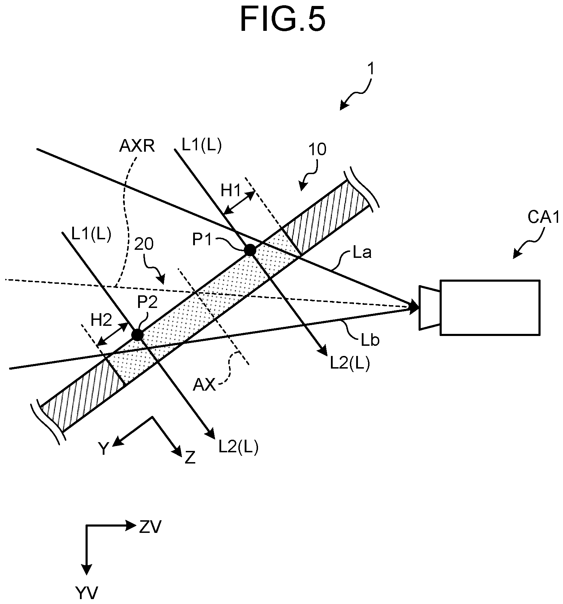

FIG. 5 is a schematic diagram illustrating an example of a state in which the vehicle glass is mounted to the vehicle. Incidentally, as illustrated in FIG. 5, the vehicle glass 1 is often mounted to the vehicle V so as to be inclined with respect to the vertical direction. Therefore, defining a direction along the lower side in the vertical direction a direction YV, the direction Y of the vehicle glass 1 in a state of being mounted to the vehicle V is inclined with respect to the direction YV, and the surface 20a of the far-infrared ray transmitting member 20 on the vehicle exterior side is also inclined with respect to the direction YV. In addition, defining a direction from the front to the rear of the vehicle V as a horizontal direction a direction ZV, the direction Z of the vehicle glass 1 in a state of being mounted to the vehicle V is inclined with respect to the direction ZV, and a perpendicular line AX orthogonal to the surface 20a of the far-infrared ray transmitting member 20 is also inclined with respect to the direction ZV. Furthermore, the perpendicular line AX of the far-infrared ray transmitting member 20 is inclined with respect to an optical axis AXR of the far-infrared camera CA1.

In a case where the vehicle glass 1 is mounted in an inclined manner as described above, the incident angle, the optical path length, and others with respect to the far-infrared ray transmitting member 20 are different between a far-infrared ray La that is transmitted through a place on the vertically upper side of the far-infrared ray transmitting member 20 and enters the far-infrared camera CA and a far-infrared ray Lb that is transmitted through a place on the vertically lower side of the far-infrared ray transmitting member 20 and enters the far-infrared camera CA. As a result, the intensity of the transmitted far-infrared ray is different between the place on the vertically upper side and the place on the lower side of the far-infrared ray transmitting member 20. As a result, the detection accuracy of far-infrared rays of the far-infrared camera CA1 may decrease. Specifically, for example, the incident angle of a far-infrared ray to the place on the vertically lower side of the far-infrared ray transmitting member 20 is shallow, or the optical path length of the far-infrared ray passing through the place on the vertically lower side of the far-infrared ray transmitting member 20 is long, and thus the intensity of the far-infrared ray transmitted through the place on the vertically lower side of the far-infrared ray transmitting member 20 decreases, whereby the detection accuracy in the field of view on the vertically lower side of the far-infrared camera CA1 may possibly decrease. Furthermore, since there is an unavoidable transmission loss in the constituent material of the far-infrared ray transmitting member 20, a long optical path of the far-infrared ray passing through the place on the vertically lower side of the far-infrared ray transmitting member 20 results in a large transmission loss of the far-infrared ray passing through the place on the vertically lower side of the far-infrared ray transmitting member 20, which may decrease the accuracy of a thermal image obtained in the lower visual field of the far-infrared camera CA1 in the vertical direction. On the other hand, in the present embodiment, the transmittance of a far-infrared ray perpendicularly incident on an incident surface (surface 20a) of the far-infrared ray transmitting member 20 is differentiated between places on the vertically upper side and the lower side, thereby suppressing a decrease in the detection accuracy of far-infrared rays of the far-infrared camera CA1. Hereinafter, specific description will be given.

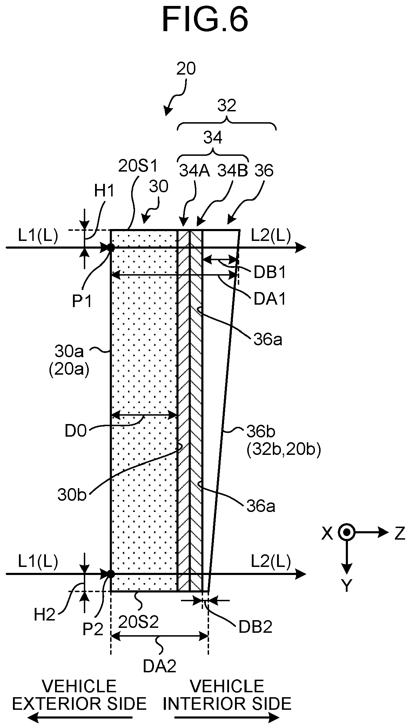

FIG. 6 is a schematic cross-sectional view of the far-infrared ray transmitting member according to the first embodiment. In this example, as illustrated in FIG. 6, the average transmittance of far-infrared rays L1 having wavelengths of 8 $\mu$m to 13 $\mu$m at a first position P1 of the far-infrared ray transmitting member 20 in a case where the surface 20a, which is a surface on the vehicle exterior side of the far-infrared ray transmitting member 20, is irradiated with the far-infrared rays L1 in a direction perpendicular to the surface 20a is defined as an average transmittance TR1. That is, the average transmittance TR1 refers to the average transmittance of the far-infrared rays having wavelengths of 8 $\mu$m to 13 $\mu$m when the far-infrared rays having the wavelengths of 8 $\mu$m to 13 $\mu$m traveling in the direction perpendicular to the surface 20a are irradiated to a place overlapping the first position P1 on the surface 20a of the far-infrared ray transmitting member 20. Likewise, the average transmittance of the far-infrared rays L1 having wavelengths of 8 $\mu$m to 13 $\mu$m at a second position P2 of the far-infrared ray transmitting member 20 in a case where the surface 20a of the far-infrared ray transmitting member 20 is irradiated with the far-infrared rays L1 in a direction perpendicular to the surface 20a is defined as an average transmittance TR2. That is, the average transmittance TR2 refers to the average transmittance of the far-infrared rays having wavelengths of 8 $\mu$m to 13 $\mu$m when the far-infrared rays having wavelengths of 8 $\mu$m to 13 $\mu$m traveling in the direction perpendicular to the surface 20a are irradiated to a place overlapping the second position P2 on the surface 20a of the far-infrared ray transmitting member 20. Note that the average transmittance in this case refers to an average value of transmittances of the wavelength bands (in this case 8 $\mu$m to 13 $\mu$m) with respect to light of the respective wavelengths, and the transmittance in this case refers to a ratio of the intensity of far-infrared rays L2 emitted from the surface 20b (the surface on the vehicle interior side of the far-infrared ray transmitting member 20) opposite to the surface 20a to the intensity of the far-infrared rays L1 incident on the surface 20a. Note that the transmittance can be measured using, for example, a Fourier transform infrared spectrometer (manufactured by Thermo Scientific, trade name: Nicolet 1S10).

As illustrated in FIGS. 5 and 6, in the far-infrared ray transmitting member 20, the average transmittance TR1 at the first position P1 is different from the average transmittance TR2 at the second position P2. Since the average transmittance TR1 and the average transmittance TR2 are different from each other, it is possible to suppress a decrease in the detection accuracy of far-infrared rays. Incidentally, the second position P2 indicates a position on the Y direction side with respect to the first position P1. Therefore, the second position P2 can be said to be a position lower than the first position P1 in the vertical direction when the vehicle glass 1 is mounted to the vehicle V. Furthermore, in the present embodiment, the first position P1 is on the side opposite to the Y direction with respect to the central position in the Y direction of the far-infrared ray transmitting member 20 and may be, for example, separated by a distance H1 in the Y direction from an end surface 20S1 on the side opposite to the Y direction of the far-infrared ray transmitting member 20 (an end surface on the upper side in the vertical direction when mounted to the vehicle). The distance H1 is, for example, 25% of the entire length of the far-infrared ray transmitting member 20 in the Y direction. Furthermore, in the present embodiment, the second position P2 is on the side advanced in the Y direction with respect to the central position in the Y direction of the far-infrared ray transmitting member 20 and may be, for example, separated by a distance H2 in the opposite direction to the Y direction from an end surface 20S2 on the side advanced in the Y direction of the far-infrared ray transmitting member 20 (an end surface on the lower side in the vertical direction when mounted to the vehicle). The distance H2 is, for example, 90% of the entire length of the far-infrared ray transmitting member 20 in the Y direction. Note that the first position P1 and the second position P2 may be the same position in the X direction, namely, be at the same position in the horizontal direction when the vehicle glass 1 is mounted to the vehicle V.

In the present embodiment, in the far-infrared ray transmitting member 20, the average transmittance TR2 at the second position P2 is preferably higher than the average transmittance TR1 at the first position P1. By setting the average transmittance TR2 higher than the average transmittance TR1, even in a case where the vehicle glass 1 is mounted in an inclined manner, the intensity of a far-infrared ray transmitted through the first position P1 and incident on the far-infrared camera CA1 can be made close to the intensity of a far-infrared ray transmitted through the second position P2 and incident on the far-infrared camera CA1, whereby a decrease in the detection accuracy of far-infrared rays can be suppressed. For example, the average transmittance TR2 is preferably within a range of 102% to 140%, more preferably within a range of 105% to 135%, and still more preferably within a range of 110% to 130% relative to the average transmittance TR1. With the ratio of the average transmittance falling within this range, a decrease in the detection accuracy of far-infrared rays can be appropriately suppressed.

Furthermore, in the present embodiment, in the far-infrared ray transmitting member 20, the average transmittance of the far-infrared rays having wavelengths of 8 $\mu$m to 13 $\mu$m preferably increases as it extends in the Y direction (toward the lower side in the vertical direction when mounted to the vehicle) in a case where the far-infrared rays L1 are irradiated in the direction perpendicular to the surface 20a. Therefore, in the far-infrared ray transmitting member 20, it can be said that it is preferable that the average transmittance of the far-infrared rays having wavelengths of 8 $\mu$m to 13 $\mu$m increases from the first position P1 toward the second position P2 when the far-infrared rays L1 are emitted in the direction perpendicular to the surface 20a. For example, the average transmittance when a position between the first position P1 and the second position P2 in the Y direction is irradiated with the far-infrared rays having wavelengths of 8 $\mu$m to 13 $\mu$m traveling in the direction perpendicular to the surface 20a is higher than the average transmittance TR1 at the first position P1 and lower than the average transmittance TR2 at the second position P2. By increasing the average transmittance toward the second position P2 in this manner, even in a case where the vehicle glass 1 is mounted in an inclined manner, the intensities of far-infrared rays transmitted through the far-infrared ray transmitting member 20 and incident on the far-infrared camera CA1 can be brought closer to being uniform, whereby a decrease in the detection accuracy of far-infrared rays can be suppressed.

Note that, in the above description, as illustrated in FIG. 5, the case has been described in which the intensity of the far-infrared ray Lb incident on the far-infrared camera CA through the place (second position PA2) on the vertically lower side of the far-infrared ray transmitting member 20 decreases due to a fact that the vehicle glass 1 is mounted while inclined in the vertical direction. However, without being limited to this, it is also conceivable that the intensity of a far-infrared ray incident on the far-infrared camera CA differs between the place (first position PA1) on the vertically upper side and the place (second position PA2) on the lower side of the far-infrared ray transmitting member 20 due to various causes. For example, also conceivable is a case in which the transmittance at a place on the vertically lower side of the far-infrared ray transmitting member 20 is higher. In accordance with such a case, in the far-infrared ray transmitting member 20 of the present embodiment, it is only required to vary the transmittance of a far-infrared ray perpendicularly incident on the incident surface (surface 20a) of the far-infrared ray transmitting member 20 between a vertically upper place (first position PA1) and a lower place (second position PA2).

(Thickness of Far-infrared Ray Transmitting Member)

As one aspect in which the average transmittance of the far-infrared rays having wavelengths of 8 $\mu$m to 13 $\mu$m varies toward the Y direction, in the far-infrared ray transmitting member 20, a thickness DA1 at the first position P1 and a thickness DA2 at the second position P2 may be different from each other. The thickness DA1 refers to a length along the Z direction from the surface 20a to the surface 20b at the first position P1, and the thickness DA2 refers to a length along the Z direction from the surface 20a to the surface 20b at the second position P2. Since the thickness DA1 and the thickness DA2 are different from each other, the average transmittance TR1 and the average transmittance TR2 can be differentiated from each other, which can suppress a decrease in the detection accuracy of far-infrared rays.

In a case where the transmittance is controlled by the thickness of the far-infrared ray transmitting member 20, the thickness DA2 at the second position P2 is preferably thinner than the thickness DA1 at the first position P1. By making the thickness DA2 smaller than the thickness DA1, the average transmittance TR2 can be made higher than the average transmittance TR1, which can suppress a decrease in the detection accuracy of far-infrared rays. For example, the thickness DA2 is preferably within a range of 60% to 98%, more preferably within a range of 65% to 95%, and still more preferably within a range of 70% to 90% relative to the thickness DA1. With the thickness ratio falling within this range, a decrease in the detection accuracy of far-infrared rays can be appropriately suppressed.

Furthermore, in the present embodiment, it is preferable that the thickness of the far-infrared ray transmitting member 20 decreases at it extends in the Y direction (as it extends vertically downward when mounted to the vehicle). Therefore, it can be said that the thickness of the far-infrared ray transmitting member 20 preferably decreases from the first position P1 toward the second position P2. With the thickness decreasing toward the second position P2, the average transmittance can be increased as it is closer to the second position P2, thereby suppressing a decrease in the detection accuracy of far-infrared rays.

Furthermore, for example, in the far-infrared ray transmitting member 20, the thickness of the far-infrared ray transmitting member 20 is preferably set such that the optical path lengths from the surface 20a to the surface 20b of far-infrared rays incident on different positions of the surface 20a, emitted from the surface 20b, and incident on the far-infrared camera CA1 are uniform. In other words, in the far-infrared ray transmitting member 20, the thickness of the far-infrared ray transmitting member 20 is preferably set such that the difference between the longest optical path length and the shortest optical path length among the optical path lengths from the surface 20a to the surface 20b of far-infrared rays incident on the surface 20a, emitted from the surface 20b, and incident on the far-infrared camera CA1 is less than or equal to a predetermined value. Note that the optical path length is a value obtained by multiplying the refractive index of a medium by the distance, and in a case where a far-infrared ray passes through a plurality of layers, the optical path length is a total value of values obtained by multiplying the refractive index of each layer by the distance.

(Layer Structure of Far-infrared Ray Transmitting Member)

Hereinafter, the layer structure of the far-infrared ray transmitting member 20 will be specifically described. As illustrated in FIG. 6, the far-infrared ray transmitting member 20 includes a base material 30 and a functional film 32 formed on the base material 30. In the example of FIG. 6, the functional film 32 is formed on surface 30b of the base material 30. The surface 30b is on the vehicle interior side when mounted to the vehicle glass 1. In the example of FIG. 6, the surface 30a on a side opposite to the surface 30b of the base material 30 is the surface 20a on the vehicle exterior side of the far-infrared ray transmitting member 20, and a surface 32b on the vehicle interior side of the functional film 32 is the surface 20b on the vehicle interior side of the far-infrared ray transmitting member 20.

(Base Material)

The base material 30 is a member capable of transmitting far-infrared rays. The base material 30 has an average internal transmittance of preferably greater than or equal to 50%, more preferably greater than or equal to 60%, and still more preferably greater than or equal to 70% with respect to light (far-infrared rays) having wavelengths of 8 $\mu$m to 13 $\mu$m. With the average internal transmittance of the base material 30 at 8 $\mu$m to 13 $\mu$m falling within these numerical ranges, far-infrared rays can be appropriately transmitted, and for example, the performance of the far-infrared camera CA1 can be sufficiently exerted. Note that the average internal transmittance in this case is an average value of the internal transmittances of the wavelength bands (in this case 8 $\mu$m to 12 $\mu$m) with respect to light of the respective wavelengths.

The internal transmittance of the base material 30 is a transmittance excluding surface reflection losses on the incident side and the emission side and is well known in the related art. The internal transmittance may be measured by a method typically performed. The measurement is performed, for example, as follows.

Prepare a pair of flat plate samples (first sample and second sample) made of a base material having the same composition and having different thicknesses. Both surfaces of the flat plate samples are parallel to each other, flat, and are optically polished. Denoting the external transmittance including the surface reflection loss of the first sample as T1, the external transmittance including the surface reflection loss of the second sample as T2, the thickness of the first sample as Td1 (mm), and the thickness of the second sample as Td2 (mm), where Td1 < Td2, the internal transmittance $\tau$ at a thickness Tdx (mm) can be calculated by the following Equation (1).

$$\tau = \exp[-Tdx \times (lnT1 - lnT2)/\Delta Td] \qquad (1)$$

Note that the external transmittance of infrared rays can be measured using, for example, a Fourier transform infrared spectrometer (manufactured by Thermo Scientific, trade name: Nicolet 1S10).

The refractive index of the base material 30 with respect to light having a wavelength of 10 $\mu$m is preferably within a range of 1.5 to 4.0, more preferably within a range of 2.0 to 4.0, and still more preferably within a range of 2.2 to 3.5. With the refractive index of the base material 30 falling within these numerical ranges, far-infrared rays can be appropriately transmitted, and for example, the performance of the far-infrared camera CA1 can be sufficiently exerted. The refractive index can be determined by performing fitting with an optical model using, for example, polarization information obtained by an infrared spectroscopic ellipsometer (IR-VASE-UT manufactured by J. A. Woollam Co., Ltd.) and a spectral transmission spectrum obtained by a Fourier transform infrared spectrometer.

The thickness D0 of the base material 30 is preferably within a range of 1.5 mm to and 5 mm, more preferably within a range of 1.7 mm to 4 mm, and still more preferably within a range of 1.8 mm to 3 mm. With the thickness D0 falling within this range, far-infrared rays can be appropriately transmitted while strength is ensured. Incidentally, the thickness D0 can also be said to be a length in the Z direction from the surface 30a to the surface 30b of the base material 30. In the example of FIG. 6, it is preferable that the base material 30 has a flat plate shape and has a uniform thickness at different positions in the Y direction. Incidentally, the thickness being uniform is not limited to being exactly the same but also includes being shifted within a range of general tolerance. However, the thickness of the base material 30 may vary depending on a position in the Y direction.

The total thickness of the base material 30 and the functional film 32, that is, the thickness of the far-infrared ray transmitting member 20 (corresponds to the thickness DA1 in FIG. 6) is preferably within a range of 1.5 mm to 5.5 mm, more preferably within a range of 1.7 mm to 4.5 mm, and still more preferably within a range of 1.8 mm to 3 mm.

The material of the base material 30 is not particularly limited, but examples thereof include Si, Ge, ZnS, and chalcogenide glass. It can be said that the base material 30 preferably contains at least one material selected from a group consisting of Si, Ge, ZnS, and chalcogenide glass. By using such a material for the base material 30, far-infrared rays can be appropriately transmitted. Preferred composition of the chalcogenide glass contains:
in at%,

Ge + Ga: 7% to 25%;
Sb: 0% to 35%;
Bi: 0% to 20%;
Zn: 0% to 20%;
Sn: 0% to 20%;
Si: 0% to 20%;
La: 0% to 20%;
S + Se + Te: 55% to 80%;
Ti: 0.005% to 0.3%;
Li + Na + K + Cs: 0% to 20%; and
F + Cl + Br + I: 0% to 20%. The glass preferably has a glass transition point (Tg) of 140°C to 550°C.

Note that it is more preferable to use Si or ZnS as the material of the base material 30.

(Functional Film)

The functional film 32 is formed on the base material 30 and suppresses reflection of far-infrared rays and adjusts transmittance of the far-infrared rays.

In the example of FIG. 6, the functional film 32 includes an antireflection film (AR film) 34 and a far-infrared ray absorbing layer 36. In the functional film 32, the antireflection film 34 and the far-infrared ray absorbing layer 36 are laminated in this order in a direction away from the base material 30. That is, in the example of FIG. 6, the base material 30, the antireflection film 34, and the far-infrared ray absorbing layer 36 are laminated in this order toward the vehicle interior side, and a surface 36b of the far-infrared ray absorbing layer 36 is the surface 20b of the far-infrared ray transmitting member 20 on the vehicle interior side (surface 32b of the functional film 32 on the vehicle interior side). However, the order of lamination of the base material 30, the antireflection film 34, and the far-infrared ray absorbing layer 36 is not limited to this and may be in any order. For example, the base material 30, the far-infrared ray absorbing layer 36, and the antireflection film 34 may be laminated in this order toward the vehicle interior side. Furthermore, in the structure of FIG. 6, the antireflection film 34 is not an essential structure, and the functional film 32 may include the far-infrared ray absorbing layer 36 without including the antireflection film 34.

(Antireflection Film)

The antireflection film 34 suppresses reflection of far-infrared rays. In the example of FIG. 6, the antireflection film 34 preferably has a uniform thickness at different positions in the Y direction. However, the thickness of the base material 30 may vary depending on a position in the Y direction.

In the example of FIG. 6, the antireflection film 34 includes a high refractive index layer 34A and a low refractive index layer 34B. In the example of FIG. 6, the high refractive index layer 34A and the low refractive index layer 34B are alternately laminated between the base material 30 and the far-infrared ray absorbing layer 36. In the example of FIG. 6, in the antireflection film 34, the high refractive index layer 34A and the low refractive index layer 34B are laminated in this order on the base material 30 in a direction away from the base material 30. Incidentally, a layer formed closest to the base material 30 in the antireflection film 34 is not limited to the high refractive index layer 34A and may be, for example, the low refractive index layer 34B. For example, the low refractive index layer 34B and the high refractive index layer 34A may be laminated in this order in a direction away from the base material 30.

Furthermore, in the example of FIG. 6, the antireflection film 34 has a structure in which one high refractive index layer 34A and one low refractive index layer 34B are laminated, but without being limited thereto, at least one of the high refractive index layer 34A or the low refractive index layer 34B may be laminated in a plurality of layers. For example, in the antireflection film 34, a plurality of high refractive index layers 34A and a plurality of low refractive index layers 34B may be alternately laminated on the base material 30 in a direction away from the base material 30. That is, in the antireflection film 34, a high refractive index layer 34A, a low refractive index layer 34B, a high refractive index layer 34A,... a low refractive index layer 34B may be laminated in this order from the base material 30. In addition, in the antireflection film 34, the low refractive index layer 34B and the high refractive index layer 34A may be alternately laminated on the base material 30 in a direction away from the base material 30. That is, the base material 30, a low refractive index layer 34B, a high refractive index layer 34A,... a low refractive index layer 34B may be laminated in this order.

As described above, the antireflection film 34 has a structure including the high refractive index layer 34A and the low refractive index layer 34B but is not limited thereto and may have any structure that suppresses reflection of far-infrared rays.

(High Refractive Index Layer)

The high refractive index layer 34A is a film laminated with the low refractive index layer 34B to suppress reflection of far-infrared rays. The high refractive index layer 34A is a film having a high refractive index with respect to far-infrared rays and has a refractive index of preferably within a range of 2.5 to 4.5, more preferably within a range of 3.0 to 4.5, and still more preferably within a range of 3.3 to 4.3 with respect to light having a wavelength of 10 $\mu$m. In addition, the high refractive index layer 34A has an average refractive index of preferably within a range of 2.5 to 4.5, more preferably within a range of 3.0 to 4.5, and still more preferably within a range of 3.3 to 4.3 with respect to light having wavelengths of 8 $\mu$m to 13 $\mu$m. With the refractive index and the average refractive index falling within these numerical ranges, the high refractive index layer 34A can appropriately function as a high refractive index layer, whereby reflection of far-infrared rays can be appropriately suppressed.

The high refractive index layer 34A can transmit far-infrared rays. The high refractive index layer 34A has an average extinction coefficient of preferably less than or equal to 0.05, more preferably less than or equal to 0.02, and still more preferably less than or equal to 0.01 with respect to light having wavelengths of 8 $\mu$m to 13 $\mu$m. With the extinction coefficient and the average extinction coefficient falling within these ranges, far-infrared rays can be appropriately transmitted. Note that the average extinction coefficient is an average value of the extinction coefficients of the wavelength bands (in this case 8 $\mu$m to 13 $\mu$m) with respect to light of the respective wavelengths. The extinction coefficient can be determined by performing fitting with an optical model using, for example, polarization information obtained by a spectroscopic ellipsometer and the spectral transmittance measured on the basis of JIS R 3106.

In addition, the thickness of the high refractive index layer 34A is preferably within a range of 0.1 $\mu$m to 2.0 $\mu$m, more preferably within a range of 0.2 $\mu$m to 1.5 $\mu$m, and still more preferably within a range of 0.3 $\mu$m to 1.2 $\mu$m.

With the thickness falling within this range, reflection of far-infrared rays can be appropriately suppressed.

The material of the high refractive index layer 34A may be any material, and examples of the material include a material containing at least one material selected from a group consisting of Si and Ge as a main component, diamond-like carbon (DLC), ZnSe, $As_2S_3$, and $As_2Se_3$.

(Low Refractive Index Layer)

The low refractive index layer 34B is a film laminated with the high refractive index layer 34A to suppress reflection of far-infrared rays. The low refractive index layer 34B has a low refractive index with respect to far-infrared rays and has a refractive index of preferably within a range of 0.8 to 2.0, more preferably within a range of 1.0 to 1.7, and still more preferably within a range of 1.0 to 1.5 with respect to light having a wavelength of 10 $\mu$m. With the refractive index and the average refractive index falling within these numerical ranges, the low refractive index layer 34B can appropriately function as a low refractive index layer, whereby reflection of far-infrared rays can be appropriately suppressed.

The low refractive index layer 34B can transmit far-infrared rays. The low refractive index layer 34B has an average extinction coefficient of preferably less than or equal to 0.05, more preferably less than or equal to 0.02, and still more preferably less than or equal to 0.01 with respect to light having wavelengths of 8 $\mu$m to 13 $\mu$m. With the extinction coefficient and the average extinction coefficient falling within these ranges, far-infrared rays can be appropriately transmitted.

In addition, the thickness of the low refractive index layer 34B is preferably within a range of 0.1 $\mu$m to 2.0 $\mu$m, more preferably within a range of 0.2 $\mu$m to 1.7 $\mu$m, and still more preferably within a range of 0.3 $\mu$m to 1.5 $\mu$m. With the thickness falling within this range, reflection of far-infrared rays can be appropriately suppressed.

The low refractive index layer 34B may be made of any material, and examples of the material include ZnS, a metal oxide (e.g. $SiO_x$, $Al_2O_3$, $NiO_x$, $CuO_x$, ZnO, $ZrO_2$, $Bi_2O_3$, $Y_2O_3$, $CeO_2$, $HfO_2$, MgO, $TiO_x$, and the like), and a metal fluoride (e.g. $MgF_2$, $CaF_2$, $SrF_2$, $BaF_2$, $PbF_2$, $LaF_3$, $YF_3$, and the like).

(Far-infrared Ray Absorbing Layer)

The far-infrared ray absorbing layer 36 absorbs far-infrared rays. The far-infrared ray absorbing layer 36 absorbs a part of incident far-infrared rays and transmits the other part. The far-infrared ray absorbing layer 36 has an average extinction coefficient of preferably within a range of 0.002 to 1.0, more preferably within a range of 0.01 to 0.5, and still more preferably within a range of 0.05 to 0.2 with respect to light having wavelengths of 8 $\mu$m to 13 $\mu$m With the average extinction coefficient falling within this range, the far-infrared ray transmittance can be appropriately controlled depending on the film thickness of the transmittance adjustment layer while the far-infrared rays are appropriately transmitted.

The material of the far-infrared ray absorbing layer 36 may be any material, and examples of the material include diamond-like carbon (DLC), $SiO_x$, $Al_2O_3$, $NiO_x$, $CuO_x$, ZnO, $ZrO_2$, $Bi_2O_3$, $Y_2O_3$, $CeO_2$, $HfO_2$, MgO, $TiO_x$, TiN, AlN, and $Si_3N_4$.

In the far-infrared ray absorbing layer 36, the thickness DB1 at the first position P1 is preferably different from the thickness DB2 at the second position P2. The thickness DB1 refers to a length along the Z direction from a first surface 36a to a second surface 36b of the far-infrared ray absorbing layer 36 at the first position P1, and the thickness DB2 refers to a length along the Z direction from the surface 36a to the surface 36b at the second position P2. Since the thickness DB1 and the thickness DB2 are different from each other, the average transmittance TR1 and the average transmittance TR2 can be differentiated from each other, which can suppress a decrease in the detection accuracy of far-infrared rays.

In the far-infrared ray absorbing layer 36, the thickness DB2 at the second position P2 is preferably thinner than the thickness DB1 at the first position P1. By making the thickness DB2 smaller than the thickness DB1, the average transmittance TR2 can be made higher than the average transmittance TR1, which can suppress a decrease in the detection accuracy of far-infrared rays. For example, the thickness DB2 is preferably within a range of 0% to 98%, more preferably within a range of 5% to 90%, and still more preferably within a range of 10% to 85% relative to the thickness DB1. With the thickness ratio falling within this range, a decrease in the detection accuracy of far-infrared rays can be appropriately suppressed.

Furthermore, in the present embodiment, it is preferable that the thickness of the far-infrared ray absorbing layer 36 decreases at it extends in the Y direction (as it extends vertically downward when mounted to the vehicle). Therefore, it can be said that the thickness of the far-infrared ray absorbing layer 36 preferably decreases from the first position P1 toward the second position P2. With the thickness decreasing toward the second position P2, the average transmittance can be increased as it is closer to the second position P2, thereby suppressing a decrease in the detection accuracy of far-infrared rays.

In the far-infrared ray absorbing layer 36, the thickness of the thinnest portion is preferably within a range of 5 nm to 1000 nm, preferably within a range of 10 nm to 500 nm, and preferably within a range of 20 nm to 300 nm. With the thickness of the thinnest portion falling within these ranges, the far-infrared rays can be appropriately absorbed, and a decrease in the detection accuracy of far-infrared rays can be suppressed.

The far-infrared ray transmitting member 20 according to the first embodiment has a structure as described above. In the far-infrared ray transmitting member 20 according to the first embodiment, by reducing the thickness of the far-infrared ray absorbing layer 36 toward the Y direction, the transmittance of the far-infrared rays incident on the far-infrared camera CA1 through the far-infrared ray transmitting member 20 can be brought closer to being uniform, whereby a decrease in the detection accuracy of far-infrared rays can be suppressed.

(Another Example)

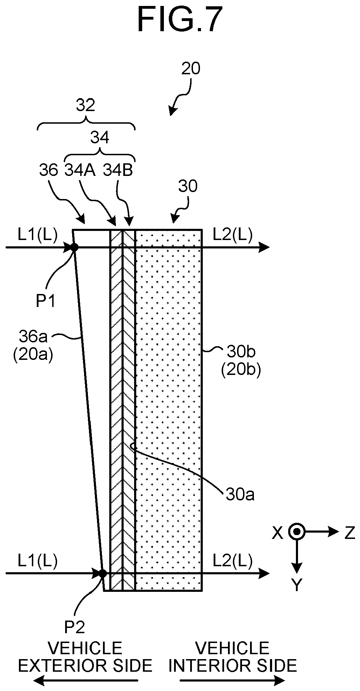

FIG. 7 is a schematic cross-sectional view of a far-infrared ray transmitting member according to another example of the first embodiment. In the example of FIG. 6, the functional film 32 is formed on the vehicle interior side of the base material 30, however, without being limited thereto, the functional film 32 may be formed on the vehicle interior side of the base material 30 as illustrated in FIG. 7. In this case, as illustrated in FIG. 7, in a far-infrared ray transmitting member 20, a far-infrared ray absorbing layer 36, an antireflection film 34, and the base material 30 are laminated in this order toward the vehicle interior side, a surface 36a of the far-infrared ray absorbing layer 36 is a surface 20a on the vehicle exterior side of the far-infrared ray transmitting member 20, and a surface 30b of the base material 30 is a surface 20b on the vehicle interior side of the far-infrared ray transmitting member 20. However, the order of lamination of the base material 30, the antireflection film 34, and the far-infrared ray absorbing layer 36 is not limited to this and may be in any order. For example, the antireflection film 34, the far-infrared ray absorbing layer 36, and the base material 30 may be laminated in this order toward the vehicle interior side. Furthermore, in the structure of FIG. 7, the antireflection film 34 is not an essential structure, and the functional film 32 may include the far-infrared ray absorbing layer 36 without including the antireflection film 34.

Furthermore, the functional film 32 may be provided on both the vehicle interior side and the vehicle interior side of the base material 30, and for example, the functional film 32 of FIG. 7 may be further formed on the far-infrared ray transmitting member 20 of FIG. 6. That is, the functional film 32 may be provided on at least one of the vehicle interior side or the vehicle exterior side of the base material 30.

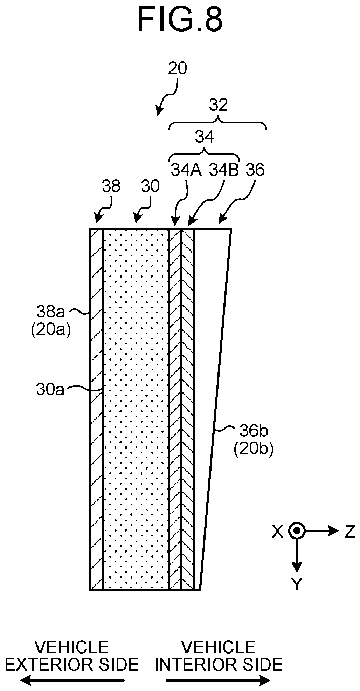

FIG. 8 is a schematic cross-sectional view of a far-infrared ray transmitting member according to another example of the first embodiment. In the above description, the far-infrared ray transmitting member 20 has a structure in which the base material 30, the antireflection film 34, and the far-infrared ray absorbing layer 36 are laminated, however, other layers may also be laminated. For example, in the example of FIG. 8, a visible light absorbing layer 38 is formed as another layer in the far-infrared ray transmitting member 20. As illustrated in FIG. 8, the visible light absorbing layer 38 is preferably formed on the vehicle exterior side with respect to the base material 30 and the functional film 32, however, the visible light absorbing layer 38 may be provided in any position.

The visible light absorbing layer 38 absorbs visible light. The visible light absorbing layer 38 has a refractive index of preferably within a range of 1.5 to 4.0, more preferably within a range of 1.7 to 3.5, and still more preferably within a range of 2.0 to 2.5 with respect to light having a wavelength of 550 nm (visible light). In addition, the visible light absorbing layer 38 has an average refractive index of preferably within a range of 1.5 to 4.0, more preferably within a range of 1.7 to 3.5, and still more preferably within a range of 2.0 to 2.5 with respect to light having a wavelength of 380 nm to 780 nm. With the refractive index and the average refractive index of the visible light absorbing layer 38 with respect to visible light falling within these numerical ranges, reflection of visible light can be suppressed, and the far-infrared ray transmitting member 20 can be made inconspicuous.

In the visible light absorbing layer 38, the extinction coefficient of light having a wavelength of 550 nm is preferably greater than or equal to 0.04, more preferably greater than or equal to 0.05, further preferably greater than or equal to 0.06, further preferably greater than or equal to 0.07, further preferably greater than or equal to 0.08, and further preferably greater than or equal to 0.10. In addition, the visible light absorbing layer 38 has an average extinction coefficient of preferably greater than or equal to 0.04, more preferably greater than or equal to 0.05, further preferably greater than or equal to 0.06, further preferably greater than or equal to 0.07, further preferably greater than or equal to 0.08, and further preferably greater than or equal to 0.10 with respect to light having a wavelength of 380 nm to 780 nm. With the extinction coefficient and the average extinction coefficient falling within these ranges, it is possible to appropriately suppress reflectance dispersion of visible light and to obtain an appearance ensuring designability.

The visible light absorbing layer 38 has a refractive index of preferably within a range of 1.5 to 4.0, more preferably within a range of 1.7 to 3.0, and still more preferably within a range of 2.0 to 2.5 with respect to light having a wavelength of 10 $\mu$m (far-infrared rays). In addition, the visible light absorbing layer 38 has an average refractive index of preferably within a range of 1.5 to 4.0, more preferably within a range of 1.7 to 3.0, and still more preferably within a range of 2.0 to 2.5 with respect to light having wavelengths of 8 $\mu$m to 13 $\mu$m. With the refractive index and the average refractive index of the visible light absorbing layer 38 with respect to far-infrared rays falling within these numerical ranges, reflection of the far-infrared rays can be suppressed, and the far-infrared rays can be appropriately transmitted.

The visible light absorbing layer 38 can transmit far-infrared rays. The visible light absorbing layer 38 has an average extinction coefficient of preferably less than or equal to 0.1, more preferably less than or equal to 0.05, and still more preferably less than or equal to 0.02 with respect to light having wavelengths of 8 $\mu$m to 13 $\mu$m. With the extinction coefficient and the average extinction coefficient falling within these ranges, far-infrared rays can be appropriately transmitted.

The thickness of the visible light absorbing layer 38 is preferably within a range of 0.1 $\mu$m to 2.0 $\mu$m, more preferably within a range of 0.5 $\mu$m to 1.5 $\mu$m, and still more preferably within a range of 0.8 $\mu$m to 1.4 $\mu$m. With the thickness falling within this range, reflection or dispersion of visible light can be appropriately suppressed while reflection of far-infrared rays is appropriately suppressed.

The material of the visible light absorbing layer 38 may be any material but preferably contains a metal oxide as the main component. Incidentally, the main component may indicate that the content ratio relative to the whole visible light absorbing layer 38 is greater than or equal to 50 mass%. As a metal oxide used for the visible light absorbing layer 38, at least one of nickel oxide ($NiO_x$), copper oxide ($CuO_x$), or manganese oxide ($MnO_x$) is preferable. The visible light absorbing layer 38 preferably contains at least one material selected from a group consisting of $NiO_x$, $CuO_x$, and $MnO_x$ as a main component. It can be said that the visible light absorbing layer 38 preferably contains NiOx as a main component or contains at least one material selected from a group consisting of $CuO_x$ and $MnO_x$ as a main component. Note that it is known that nickel oxide, copper oxide, and manganese oxide have a plurality of forms of composition depending on the valency of nickel, copper, and manganese, respectively, and x can be any value from 0.5 to 2. The valence number may not be one number, and two or more valence numbers may be present at the same time. In the present embodiment, NiO is preferably used as $NiO_x$, CuO is preferably used as $CuO_x$, and MnO is preferably used as $MnO_x$. However, the material of the visible light absorbing layer 38 is not limited thereto and may be any material such as diamond-like carbon.

In the above description, the visible light absorbing layer 38 has been described as a layer other than the base material 30, the antireflection film 34, or the far-infrared ray absorbing layer 36, however, a layer different from the visible light absorbing layer 38 may be laminated, or another layer may be laminated in addition to the visible light absorbing layer 38. Examples of the other layer include a protective film formed on a surface of the far-infrared ray transmitting member 20 on the outermost side of the vehicle. The protective film preferably contains, for example, at least one material selected from a group consisting of $ZrO_2$, $Al_2O_3$, $TiO_2$, $Si_3N_4$, AIN, and diamond-like carbon. By forming the protective film, the far-infrared ray transmitting member 20 can be appropriately protected.

(Effects)

As described above, the vehicle glass 1 according to the first embodiment includes the light shielding region A2, and the far-infrared ray transmitting region B, in which the opening 19 and the far-infrared ray transmitting member 20 disposed in the opening 19 are included, is formed in the light shielding region A2. In the far-infrared ray transmitting member 20, the average transmittance TR1 of the far-infrared rays having wavelengths of 8 $\mu$m to 13 $\mu$m at the first position P1 in a case where the far-infrared rays are emitted in a direction perpendicular to the surface 20a on the vehicle exterior side is different from the average transmittance TR2 of the far-infrared rays having wavelengths of 8 $\mu$m to 13 $\mu$m at the second position P2 that is lower than the first position P1 in the vertical direction in a case where the vehicle glass 1 is mounted to the vehicle V. In the vehicle glass 1 according to the first embodiment, since the average transmittance TR1 and the average transmittance TR2 of the far-infrared ray transmitting member 20 are different from each other, it is possible to suppress a decrease in the detection accuracy of far-infrared rays.

In addition, in the far-infrared ray transmitting member 20, the average transmittance TR2 of the far-infrared rays having wavelengths of 8 $\mu$m to 13 $\mu$m at the second position P2 is preferably higher than the average transmittance TR1 of the far-infrared rays having wavelengths of 8 $\mu$m to 13 $\mu$m at the first position P1 in a case where the far-infrared rays are emitted in the direction perpendicular to the surface 20a on the vehicle exterior side. As a result, even in a case where the vehicle glass 1 is mounted in an inclined manner, the intensity of a far-infrared ray transmitted through the first position P1 and incident on the far-infrared camera CA1 can be brought closer to the intensity of a far-infrared ray transmitted through the second position P2 and incident on the far-infrared camera CA1, whereby a decrease in the detection accuracy of far-infrared rays can be suppressed.

In addition, in the far-infrared ray transmitting member 20, it is preferable that the average transmittance of the far-infrared rays having wavelengths of 8 $\mu$m to 13 $\mu$m increases from the first position P1 toward the second position P2 when the far-infrared rays are emitted in the direction perpendicular to the surface 20a on the vehicle exterior side. As a result, even in a case where the vehicle glass 1 is mounted in an inclined manner, it is made possible to bring the intensity of the far-infrared rays transmitted through the far-infrared ray transmitting member 20 and incident on the far-infrared camera CA1 closer to being uniform, whereby a decrease in the detection accuracy of far-infrared rays can be suppressed.

In addition, the far-infrared ray transmitting member 20 preferably includes the base material 30 that transmits the far-infrared rays and the functional film 32 formed on the base material 30. As a result, the vehicle glass 1 can appropriately transmit far-infrared rays.

Moreover, the functional film 32 preferably includes the far-infrared ray absorbing layer 36. The far-infrared ray absorbing layer 36 absorbs far-infrared rays, and the thickness thereof decreases from the first position P1 toward the second position P2. As a result, it is made possible in the vehicle glass 1 to bring the intensity of the far-infrared rays transmitted through the far-infrared ray transmitting member 20 and incident on the far-infrared camera CA1 closer to being uniform, whereby a decrease in the detection accuracy of far-infrared rays can be suppressed.

In addition, the base material 30 preferably contains at least one material selected from a group consisting of Si, Ge, ZnS, and chalcogenide glass. By using such a material for the base material 30, the vehicle glass 1 can appropriately transmit far-infrared rays.

Moreover, the far-infrared ray transmitting member 20 preferably includes the base material 30 that transmits the far-infrared rays and the visible light absorbing layer 38 formed on the base material 30 and containing a metal oxide as a main component. With the far-infrared ray transmitting member 20 including the visible light absorbing layer 38, the far-infrared ray transmitting member 20 is difficult to be visually recognized by a person and is inconspicuous. In particular, there are cases where the far-infrared ray transmitting member 20 is disposed in the light shielding region A2 formed of black ceramics or the like, and it is preferable to increase the affinity in appearance with the light shielding region A2. Since the far-infrared ray transmitting member 20 includes the visible light absorbing layer 38, the affinity in appearance with the light shielding region A2 is high, whereby the designability is secured.

In addition, the visible light absorbing layer 38 preferably contains at least one material selected from a group consisting of $NiO_x$, $CuO_x$, and $MnO_x$ as a main component. With such a material of the visible light absorbing layer 38, the visible light can be appropriately absorbed, and the designability of the far-infrared ray transmitting member 20 can be appropriately secured.

(First Modification)

Next, a first modification of the first embodiment will be described. In the first embodiment, the average transmittance TR1 at the first position PA1 and the average transmittance TR2 at the second position PA2 are differentiated from each other by varying the thickness of the far-infrared ray absorbing layer 36, however, the method for differentiating the average transmittance TR1 and the average transmittance TR2 from each other is not limited thereto. For example, as described in the first modification, the average transmittance TR1 and the average transmittance TR2 may be differentiated by varying the thickness of the antireflection film. In the first modification, description will be omitted for a portion having the same structure as that of the first embodiment. Note that the first modification is also applicable to the first embodiment. That is, the thickness of the antireflection film may be varied as in the first modification while the thickness of the far-infrared ray absorbing layer 36 is varied as in the first embodiment.

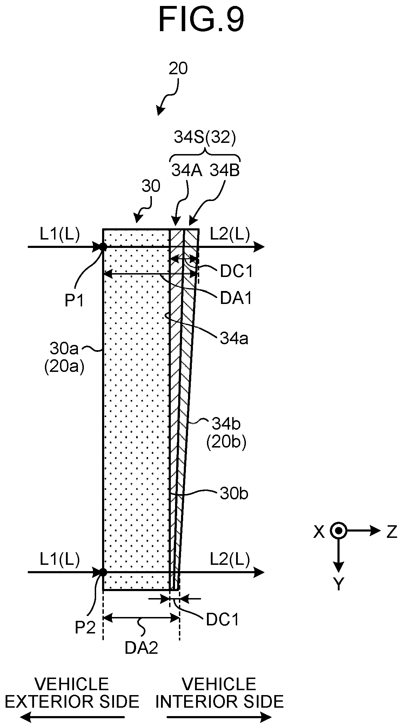

FIG. 9 is a schematic cross-sectional view of a far-infrared ray transmitting member according to the first modification. As illustrated in FIG. 9, in a far-infrared ray transmitting member 20 of the first modification, the functional film 32 includes an antireflection film 34S but does not include the far-infrared ray absorbing layer 36. However, also in the first modification, the far-infrared ray absorbing layer 36 may also be included.

The antireflection film 34S of the first modification absorbs a part of far-infrared rays incident thereon while suppressing reflection of the far-infrared ray. That is, the antireflection film 34S has a function as an AR film and a function as a far-infrared ray absorbing layer. The antireflection film 34S has an average extinction coefficient of preferably within a range of 0.01 to 0.1 and more preferably within a range of 0.02 to 0.05 with respect to light having wavelengths of 8 μm to 13 μm. When the extinction coefficient and the average extinction coefficient falling within these ranges, a part of the far-infrared rays can be appropriately absorbed.

In the antireflection film 34S, the thickness DC1 at the first position P1 is preferably different from the thickness DC2 at the second position P2. Since the thickness DC1 and the thickness DC2 are different from each other, the average transmittance TR1 and the average transmittance TR2 can be differentiated from each other, which can suppress a decrease in the detection accuracy of far-infrared rays.

In the antireflection film 34S, the thickness DC2 at the second position P2 is preferably thinner than the thickness DC1 at the first position P1. By making the thickness DC2 smaller than the thickness DC1, the average transmittance TR2 can be made higher than the average transmittance TR1, which can suppress a decrease in the detection accuracy of far-infrared rays.

Furthermore, in the first modification, it is preferable that the thickness of the antireflection film 34S decreases at it extends in the Y direction (as it extends vertically downward when mounted to a vehicle). Therefore, it can be said that the thickness of the antireflection film 34S preferably decreases from the first position P1 toward the second position P2. With the thickness decreasing toward the second position P2, the average transmittance can be increased as it is closer to the second position P2, thereby suppressing a decrease in the detection accuracy of far-infrared rays.

The antireflection film 34S includes a high refractive index layer 34A and a low refractive index layer 34B. Since the lamination structure of the high refractive index layer 34A and the low refractive index layer 34B is similar to that of the first embodiment, description thereof is omitted. Note that the antireflection film 34S is not limited to the structure including the high refractive index layer 34A and the low refractive index layer 34B.

In the high refractive index layer 34A of the first modification, the thickness at the first position P1 is preferably different from the thickness at the second position P2. In the high refractive index layer 34A of the first modification, the thickness at the second position P2 is preferably thinner than the thickness at the first position P1. In addition, the thickness of the high refractive index layer 34A of the first modification preferably decreases as it extends in the Y direction (as it extends vertically downward when mounted to the vehicle). Therefore, it can be said that the thickness of the high refractive index layer 34A of the first modification preferably decreases from the first position P1 toward the second position P2.

The high refractive index layer 34A of the first modification may be similar to that of the first embodiment except that the thickness is different depending on a position as described above.

In the low refractive index layer 34B of the first modification, the thickness at the first position P1 is preferably different from the thickness at the second position P2. In the low refractive index layer 34B of the first modification, the thickness at the second position P2 is preferably thinner than the thickness at the first position P1. In addition, the thickness of the low refractive index layer 34B of the first modification preferably decreases as it extends in the Y direction (as it extends vertically downward when mounted to the vehicle). Therefore, it can be said that the thickness of the low refractive index layer 34B of the first modification preferably decreases from the first position P1 toward the second position P2.

The low refractive index layer 34B of the first modification may be similar to that of the first embodiment except that the thickness is different depending on a position as described above.

As described above, in the first modification, the thickness of the antireflection film 34S as a laminated body at each position is varied by varying the thickness of the high refractive index layer 34A and the low refractive index layer 34B at each position. However, the method of varying the thickness of the antireflection film 34S for each position is not limited thereto, and for example, the thickness of at least one of the high refractive index layer 34A or the low refractive index layer 34B may be varied for each position as described above.

In addition, for example, the thickness of the antireflection film 34S at each position may be varied by varying the number of laminated layers of the high refractive index layer 34A and the low refractive index layer 34B at each position without varying the thickness of the high refractive index layer 34A and the low refractive index layer 34B at each position. In this case, in the antireflection film 34S, the number of lamination layers at the first position P1 is preferably different from the number of laminated layers at the second position P2. In addition, in the antireflection film 34S, the number of laminated layers at the second position P2 is preferably smaller than the number of laminated layers at the first position P1. In addition, in the antireflection film 34S, the number of laminated layers preferably decreases as it extends in the Y direction (as it extends vertically downward when mounted to a vehicle). Therefore, it can be said that the number of laminated layers of the antireflection film 34S preferably decreases from the first position P1 toward the second position P2.

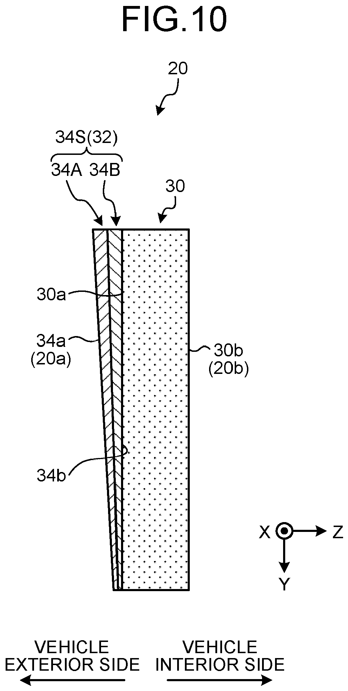

FIG. 10 is a schematic cross-sectional view of a far-infrared ray transmitting member according to another example of the first modification. In the example of FIG. 9, the functional film 32 is formed on the vehicle interior side of the base material 30, however, without being limited thereto, the functional film 32 may be formed on the vehicle exterior side of the base material 30 as illustrated in FIG. 10. Furthermore, the functional film 32 may be provided on both the vehicle interior side and the vehicle exterior side of the base material 30, and for example, the functional film 32 of FIG. 10 may be further formed on the far-infrared ray transmitting member 20 of FIG. 9. That is, the functional film 32 may be provided on at least one of the vehicle interior side or the vehicle exterior side of the base material 30. Also in the first modification, as in the first embodiment, other layers such as the visible light absorbing layer 38 may be laminated.

As described above, in the first modification, the functional film 32 includes the antireflection film 34S that absorbs the far-infrared rays, suppresses reflection of the far-infrared rays, and has a thickness that decreases from the first position P1 toward the second position P2. As a result, it is made possible in the vehicle glass 1 to bring the intensity of the far-infrared rays transmitted through the far-infrared ray transmitting member 20 and incident on the far-infrared camera CA1 closer to being uniform, whereby a decrease in the detection accuracy of far-infrared rays can be suppressed.

(Second Modification)

Next, a second modification of the first embodiment will be described. In the second modification, an average transmittance TR1 and an average transmittance TR2 are differentiated by varying the thickness of a base material. In the second modification, description will be omitted for a portion having the same structure as that of the first embodiment. Note that the second modification is also applicable to the first embodiment or the first modification. That is, the thickness of the base material may be varied as in the second modification while varying the thicknesses of a far-infrared ray absorbing layer or an antireflection film as in the first embodiment and the first modification.

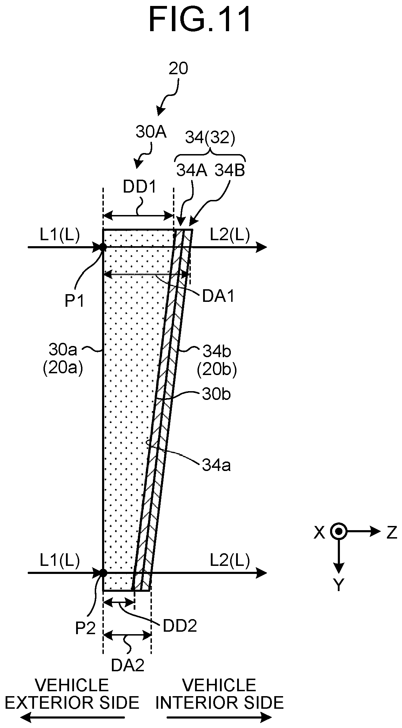

FIG. 11 is a schematic cross-sectional view of a far-infrared ray transmitting member according to the second modification. As illustrated in FIG. 11, in a far-infrared ray transmitting member 20 of the second modification, the functional film 32 includes an antireflection film 34 but does not include a far-infrared ray absorbing layer 36. However, also in the second modification, the far-infrared ray absorbing layer 36 may also be included.

A base material 30A of the second modification absorbs a part of incident far-infrared rays and transmits the other part. That is, the base material 30A has a function as a member that transmits far-infrared rays and a function as a far-infrared ray absorbing layer. The base material 30A has an average extinction coefficient of preferably within a range of 0.00001 to 0.0005, and more preferably within a range of 0.00002 to 0.0002. with respect to light having wavelengths of 8 $\mu$m to 13 $\mu$m. When the extinction coefficient and the average extinction coefficient falling within these ranges, a part of the far-infrared rays can be appropriately absorbed.

In the base material 30A, the thickness DD1 at the first position P1 and the thickness DD2 at the second position P2 are preferably different. Since the thickness DD1 and the thickness DD2 are different from each other, the average transmittance TR1 and the average transmittance TR2 can be differentiated from each other, which can suppress a decrease in the detection accuracy of far-infrared rays.

In the base material 30A, the thickness DD2 at the second position P2 is preferably thinner than the thickness DD1 at the first position P1. By making the thickness DD2 smaller than the thickness DD1, the average transmittance TR2 can be made higher than the average transmittance TR1, which can suppress a decrease in the detection accuracy of far-infrared rays. For example, the thickness DD2 is preferably within a range of 25% to 90%, more preferably within a range of 30% to 80%, and still more preferably within a range of 40% to 70% relative to the thickness DD1. With the thickness ratio falling within this range, a decrease in the detection accuracy of far-infrared rays can be appropriately suppressed.

Furthermore, in the second modification, it is preferable that the thickness of the base material 30A decreases as it extends in the Y direction (as it extends vertically downward when mounted to a vehicle). Therefore, it can be said that the thickness of the base material 30A preferably decreases from the first position P1 toward the second position P2. With the thickness decreasing toward the second position P2, the average transmittance can be increased as it is closer to the second position P2, thereby suppressing a decrease in the detection accuracy of far-infrared rays.

In the base material 30A, the thickness of the thinnest portion is preferably within a range of 1.5 mm to 4.5 mm, preferably within a range of 1.6 mm to 4.0 mm, and preferably within a range of 1.8 mm to 3.0 mm. With the thickness of the thinnest portion falling within these ranges, the far-infrared rays can be appropriately absorbed while the strength of the far-infrared ray transmitting member is maintained, and a decrease in the detection accuracy of far-infrared rays can be suppressed.

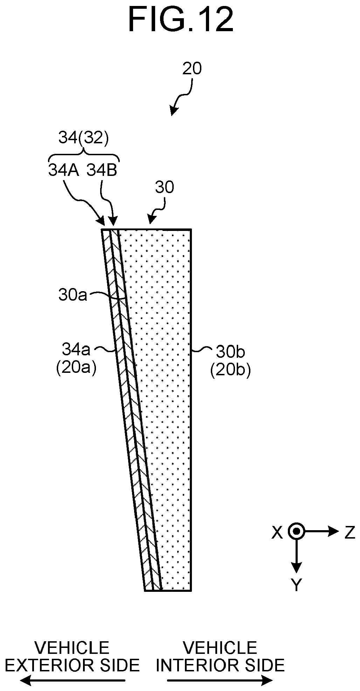

FIG. 12 is a schematic cross-sectional view of a far-infrared ray transmitting member according to another example of the second modification. In the example of FIG. 11, the functional film 32 is formed on the vehicle interior side of the base material 30A, however, without being limited thereto, the functional film 32 may be formed on the vehicle exterior side of the base material 30A as illustrated in FIG. 12. Furthermore, the functional film 32 may be provided on both the vehicle interior side and the vehicle exterior side of the base material 30, and for example, the functional film 32 of FIG. 12 may be further formed on the far-infrared ray transmitting member 20 of FIG. 11. That is, the functional film 32 may be provided on at least one of the vehicle interior side or the vehicle exterior side of the base material 30A. Also in the second modification, as in the first embodiment, other layers such as the visible light absorbing layer 38 may be laminated.

As described above, in the second modification, the far-infrared ray transmitting member 20 includes the base material 30A that absorbs a part of the far-infrared ray incident thereon, transmits a part of the far-infrared ray, and has a thickness that decreases from the first position P1 toward the second position P2. As a result, it is made possible in the vehicle glass 1 to bring the intensity of the far-infrared rays transmitted through the far-infrared ray transmitting member 20 and incident on the far-infrared camera CA1 closer to being uniform, whereby a decrease in the detection accuracy of far-infrared rays can be suppressed.

(Second Embodiment)

Next, a second embodiment will be described. In the first embodiment or the modifications, the transmittance of the far-infrared rays is increased toward the second position P2 by decreasing the thickness toward the second position P2 and thereby decreasing the absorption ratio of the far-infrared rays toward the second position P2, however, the method of increasing the transmittance of the far-infrared rays toward the second position P2 is not limited thereto. For example, as described in the second embodiment, the transmittance of the far-infrared rays may be increased toward the second position P2 by decreasing the reflectance of the far-infrared rays toward the second position P2. In the second embodiment, description will be omitted for a portion having the same structure as that of the first embodiment. Note that the second embodiment is also applicable to the first embodiment or the second modification.

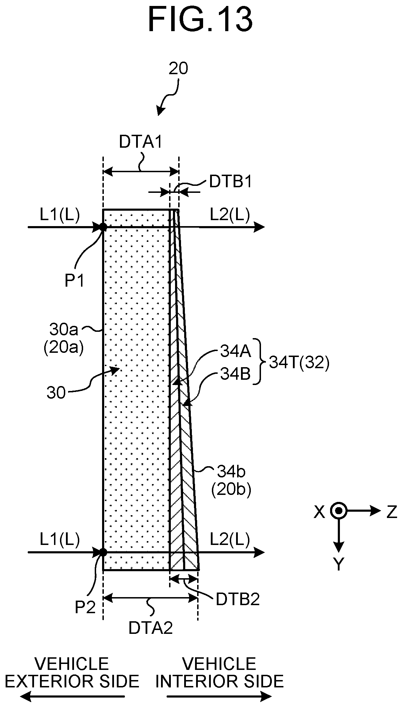

FIG. 13 is a schematic cross-sectional view of a far-infrared ray transmitting member according to the second embodiment. As illustrated in FIG. 13, in a far-infrared ray transmitting member 20 of the second embodiment, a functional film 32 includes an antireflection film 34T. The antireflection film 34T of the second embodiment is set such that the reflectance of the far-infrared rays increases as the thickness increases. In the second embodiment, the functional film 32 does not include the far-infrared ray absorbing layer 36. However, also in the second modification, the far-infrared ray absorbing layer 36 may be included.

(Thickness of Far-infrared Ray Transmitting Member)

In the far-infrared ray transmitting member 20 of the second embodiment, the thickness DTA1 at the first position P1 is preferably different from the thickness DTA2 at the second position P2. Since the thickness DTA1 and the thickness DTA2 are different from each other, the average transmittance TR1 and the average transmittance TR2 can be differentiated from each other, which can suppress a decrease in the detection accuracy of far-infrared rays.

In the far-infrared ray transmitting member 20 of the second embodiment, the thickness DTA2 at the second position P2 is preferably larger than the thickness DTA1 at the first position P1. By making the thickness DTA2 larger than the thickness DTA1, the average transmittance TR2 can be made higher than the average transmittance TR1, which can suppress a decrease in the detection accuracy of far-infrared rays.

Furthermore, in the second embodiment, it is preferable that the thickness of the far-infrared ray transmitting member 20 increases at it extends in the Y direction (as it extends vertically downward when mounted to the vehicle). Therefore, it can be said that the thickness of the far-infrared ray transmitting member 20 preferably increases from the first position P1 toward the second position P2. With the thickness increasing toward the second position P2, the average transmittance can be increased as it is closer to the second position P2, thereby suppressing a decrease in the detection accuracy of far-infrared rays.

(Thickness of Antireflection Film)

In the antireflection film 34T, the thickness DTB1 at the first position P1 is preferably different from the thickness DTB2 at the second position P2. Since the thickness DTB1 and the thickness DTB2 are different from each other, the average transmittance TR1 and the average transmittance TR2 can be differentiated from each other, which can suppress a decrease in the detection accuracy of far-infrared rays.

In the antireflection film 34T, the thickness DTB2 at the second position P2 is preferably larger than the thickness DTB1 at the first position P1. By making the thickness DTB2 larger than the thickness DTB1, the average transmittance TR2 can be made higher than the average transmittance TR1, which can suppress a decrease in the detection accuracy of far-infrared rays.

Furthermore, it is preferable that the thickness of the antireflection film 34T increases at it extends in the Y direction (as it extends vertically downward when mounted to a vehicle). Therefore, it can be said that the thickness of the antireflection film 34T preferably increases from the first position P1 toward the second position P2. With the thickness increasing toward the second position P2, the average transmittance can be increased as it is closer to the second position P2, thereby suppressing a decrease in the detection accuracy of far-infrared rays.

The antireflection film 34T includes a high refractive index layer 34A and a low refractive index layer 34B. Since the lamination structure of the high refractive index layer 34A and the low refractive index layer 34B is similar to that of the first embodiment, description thereof is omitted. Note that the antireflection film 34T is not limited to the structure including the high refractive index layer 34A and the low refractive index layer 34B.

In the high refractive index layer 34A of the second embodiment, the thickness at the first position P1 is preferably different from the thickness at the second position P2. In the high refractive index layer 34A of the second embodiment, the thickness at the second position P2 is preferably larger than the thickness at the first position P1. In addition, the thickness of the high refractive index layer 34A of the second modification preferably increases as it extends in the Y direction (as it extends vertically downward when mounted to the vehicle). Therefore, it can be said that the thickness of the high refractive index layer 34A of the second embodiment preferably increases from the first position P1 toward the second position P2.

The high refractive index layer 34A of the second modification may be similar to that of the first embodiment except that the thickness is different depending on a position as described above.

In the low refractive index layer 34B of the second embodiment, the thickness at the first position P1 is preferably different from the thickness at the second position P2. In the low refractive index layer 34B of the second embodiment, the thickness at the second position P2 is preferably larger than the thickness at the first position P1. In addition, the thickness of the low refractive index layer 34B of the second embodiment preferably increases as it extends in the Y direction (as it extends vertically downward when mounted to the vehicle). Therefore, it can be said that the thickness of the low refractive index layer 34B of the second embodiment preferably increases from the first position P1 toward the second position P2.

The low refractive index layer 34B of the second embodiment may be similar to that of the first embodiment except that the thickness is different depending on a position as described above.

As described above, in the second modification, the thickness of the antireflection film 34T as a laminated body at each position is varied by varying the thickness of the high refractive index layer 34A and the low refractive index layer 34B at each position. However, the method of varying the thickness of the antireflection film 34T for each position is not limited thereto, and for example, the thickness of at least one of the high refractive index layer 34A or the low refractive index layer 34B may be varied for each position as described above.

In addition, for example, the thickness of the antireflection film 34T at each position may be varied by varying the number of laminated layers of the high refractive index layer 34A and the low refractive index layer 34B at each position without varying the thickness of the high refractive index layer 34A and the low refractive index layer 34B at each position. In this case, in the antireflection film 34T, the number of lamination layers at the first position P1 is preferably different from the number of laminated layers at the second position P2. In addition, in the antireflection film 34T, the number of laminated layers at the second position P2 is preferably larger than the number of laminated layers at the first position P1. In addition, in the antireflection film 34T, the number of laminated layers preferably increases as it extends in the Y direction (as it extends vertically downward when mounted to a vehicle). Therefore, it can be said that the number of laminated layers of the antireflection film 34T preferably increases from the first position P1 toward the second position P2.

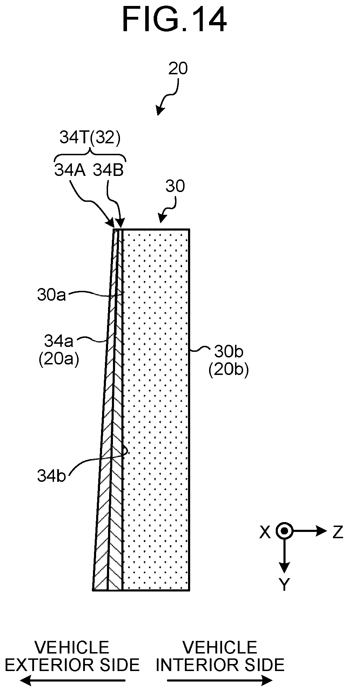

FIG. 14 is a schematic cross-sectional view of a far-infrared ray transmitting member according to another example of the second embodiment. In the example of FIG. 13, a functional film 32T is formed on the vehicle interior side of the base material 30, however, without being limited thereto, the functional film 32T may be formed on the vehicle exterior side of the base material 30 as illustrated in FIG. 14. Furthermore, the functional film 32T may be provided on both the vehicle interior side and the vehicle exterior side of the base material 30, and for example, the functional film 32T of FIG. 14 may be further formed on the far-infrared ray transmitting member 20 of FIG. 13. That is, the functional film 32T may be provided on at least one of the vehicle interior side or the vehicle exterior side of the base material 30. Also in the second embodiment, as in the first embodiment, other layers such as the visible light absorbing layer 38 may be laminated.

As described above, in the second embodiment, the functional film 32 preferably includes the antireflection film 34T that suppresses reflection of the far-infrared rays and has a thickness that increases from the first position P1 toward the second position P2. As a result, it is made possible in the vehicle glass 1 to reduce the reflectance of the far-infrared rays toward the second position P2 and to bring the intensity of the far-infrared rays transmitted through the far-infrared ray transmitting member 20 and incident on the far-infrared camera CA1 closer to being uniform, whereby a decrease in the detection accuracy of far-infrared rays can be suppressed.

In addition, the antireflection film 34T includes lamination of a plurality of layers, and the number of laminations may increase from the first position P1 toward the second position P2. As a result, it is made possible in the vehicle glass 1 to reduce the reflectance of the far-infrared rays toward the second position P2 and to bring the intensity of the far-infrared rays transmitted through the far-infrared ray transmitting member 20 and incident on the far-infrared camera CA1 closer to being uniform, whereby a decrease in the detection accuracy of far-infrared rays can be suppressed.

In addition, the antireflection film 34T includes lamination of the plurality of layers, and the thickness of at least one of the layers may increase from the first position P1 toward the second position P2. As a result, it is made possible in the vehicle glass 1 to reduce the reflectance of the far-infrared rays toward the second position P2 and to bring the intensity of the far-infrared rays transmitted through the far-infrared ray transmitting member 20 and incident on the far-infrared camera CA1 closer to being uniform, whereby a decrease in the detection accuracy of far-infrared rays can be suppressed.

Next, Examples will be described.

<Production of Far-Infrared Ray Transmitting Member >

First, Si (FZ grade) having a diameter of 50 mm and a thickness of 2.0 ± 0.05 mm was prepared as a base material. Incidentally, the thicknesses of the base material and a functional film were measured with a digital caliper (CD-15CX manufactured by Mitutoyo Corporation).

(Example 1)

A 1000 nm-thick film of diamond-like carbon (DLC) was formed by plasma CVD on a surface of the base material on a vehicle exterior side to obtain a protective film. Thereafter, a Ge film and then a ZnS film were formed on a surface of the base material on a vehicle interior side by vapor deposition while the base material was tilted to form an antireflection film.

Defining an upper end in the Y direction when the obtained far-infrared ray transmitting member was mounted to the vehicle as the origin, and setting the position of P1 to 5 mm, and the position of P2 to 45 mm, the film thicknesses of each of the layers at P1 and P2 were as shown in Table 1.

(Example 2)

An NiO$_x$ film was formed on the surface of the base material on the vehicle exterior side by a magnetron sputtering method while the base material was tilted to form an antireflection film. The film thicknesses of each layer at P1 and P2 were as illustrated in Table 1.

(Example 3)

A Ge film having a thickness of 150 nm was formed on the surface of the base material on the vehicle interior side by a vapor deposition method, and then an NiO$_x$ film was formed by a magnetron sputtering method while the base material was tilted to obtain an antireflection film. The film thicknesses of each layer at P1 and P2 were as illustrated in Table 1.

(Example 4)

An NiO$_x$ film having a thickness of 1200 nm was formed on the surface of the base material on the vehicle exterior side by a magnetron sputtering method to obtain an antireflection film. Thereafter, an Al$_2$O$_3$ film was formed on the surface of the base material on the vehicle interior side similarly by a magnetron sputtering method while the base material was tilted to obtain a far-infrared ray absorbing layer. The film thicknesses of each layer at P1 and P2 were as illustrated in Table 1.

(Example 5)

A far-infrared ray transmitting member was prepared in a similar manner to that in Example 1 except that the antireflection film was formed without tilting the base material. The film thicknesses of each layer at P1 and P2 were as illustrated in Table 1.

(Example 6)

An NiO$_x$ film of 1000 nm, a ZrO$_2$ film of 25 nm, an NiO$_x$ film of 15 nm, and a ZrO$_2$ film of 200 nm were formed in this order on the surface of the base material on the vehicle exterior side in a direction away from the base material by a magnetron sputtering method to form an antireflection film. Thereafter, an NiO$_x$ film was formed on the surface of the base material on the vehicle interior side similarly by a magnetron sputtering method while the base material was tilted to obtain a far-infrared ray absorbing layer. The film thicknesses of each layer at P1 and P2 were as illustrated in Table 1.

<Evaluation of Average Transmittance at Positions P1 and P2 of Far-infrared Ray Transmitting Member>

The infrared ray transmission spectrum of the far-infrared ray transmitting members obtained in Examples 1 to 6 were measured at each of the positions P1 and P2 using a Fourier transform infrared spectrometer (manufactured by Thermo Scientific, trade name: Nicolet 1S10), and the average transmittance at wavelengths of 8 μm to 13 μm was derived from the obtained infrared ray transmission spectrum.

<Preparation and Installation of Far-infrared Ray Transmitting Window>

First, laminated glass was prepared in which PVB having a thickness of 0.76 mm was disposed between sodalime glass having a size of 300 mm × 300 mm and a thickness of 2.0 mm. Next, a through hole of Φ 53.5 mm was formed in the center of the laminated glass, and the infrared ray transmitting members obtained in Examples 1 to 5 were mounted to the through hole through an attachment of a resin molded body to obtain far-infrared ray transmitting windows.

<Evaluation of Actual Measurement of Thermal Image of Far-infrared Ray Transmitting Windows>

For the evaluation, a planar blackbody furnace (DBB-LC50 manufactured by IR System Co., Ltd.) and a far-infrared camera (Boson 640, HFOV: 18°, manufactured by FLIR Systems, Inc.) were used. The mounting angle (inclination angle with respect to the vertical direction) of the far-infrared ray transmitting window was set to 30°, the position of the far-infrared camera was adjusted while a thermal image is viewed so that the viewing angle of the far-infrared camera is not blocked by the far-infrared ray transmitting window, whereby the far-infrared ray transmitting window was fixed. Next, the planar blackbody furnace was disposed so that the far-infrared camera was in focus through the far-infrared ray transmitting window, the temperature of the planar blackbody furnace was set to 50°C, and after waiting until the temperature became constant, thermal image evaluation was performed. In the evaluation of a thermal image, after the thermal image was stored in gray scale, the luminance distribution was analyzed in the Y direction (vertical direction of the vehicle) using image processing software, and the luminance difference at the positions P1 and P2 at the center in the X direction was evaluated by P2/P1 (%).

<Simulation Evaluation of Thermal Image of Farinfrared Ray Transmitting Window >

Further using optical simulation software (manufactured by Eclat Digital Research, Inc.: Ocean), similarly to the actual measurement, an infrared emitting object simulating a blackbody furnace at 50°C (323 K), a far-infrared ray transmitting window, and a far-infrared camera were arranged, whereby radiance was evaluated. From an evaluation luminance distribution that has been obtained, a luminance difference between the positions P1 and P2 was evaluated by $P2/P1_{sim}$ (%).
Note that the calculation was performed from the transmittance at the mounting angle of each far-infrared ray transmitting member on a premise that the heat release in the infrared emitting object can be approximated by Lambertian.

(Example 7: Reference Example)

A thermal image was evaluated in a similar manner as in Example 1 except that the mounting angle of the far-infrared ray transmitting window in Example 1 was set to 90°. The results are shown in Table 1.

Table 1

| | | Example 1 | Example 2 | Example 3 | Example 4 | Example 5 | Example 6 | Example 7 |
|---|---|---|---|---|---|---|---|---|
| Film structure on vehicle exterior side [nm] | P1 | DLC:1000 | NiOx:500 | - | NiOx:1200 | DLC:1000 | NiOx:1 000,ZrO2:25, NiOx:15,ZrO2:200 | DLC:1000 |
| | P2 | DLC:1000 | NiOx:1200 | - | NiOx:1200 | DLC:1000 | NiOx:1 000,ZrO2:25, NiOx:15,ZrO2:200 | DLC:1000 |
| Film structure on vehicle interior side [nm] | P1 | Ge:30,ZnS:400 | - | Ge:150,NiOx:700 | Al2O3:700 | Ge:100,ZnS:1200 | NiOx:500 | Ge:100,ZnS:1200 |
| | P2 | Ge:100,ZnS:1200 | - | Ge:150,NiOx 1200 | Al2O3:20 | Ge:100,ZnS:1200 | NiOx:1200 | Ge:100,ZnS:1200 |
| Average transmittance [%] | P1 | 54 | 54 | 53 | 51 | 69 | 58 | 69 |
| | P2 | 69 | 66 | 71 | 54 | 69 | 70 | 69 |
| Mounting angle [°] | | 30 | 30 | 30 | 30 | 30 | 30 | 90 |
| Luminance difference P2/P1 [%] | | 94 | - | - | - | 80 | - | 100 |
| Luminance difference P2/P1sim [%] | | 96 | 92 | 109 | 101 | 81 | 102 | 100 |

In Examples 1, 5, and 7, actual measurement evaluation and simulation evaluation of thermal images were performed, and in Examples 2 to 4 and 6, only the simulation evaluation was performed.

From Examples 1, 5, and 7, the luminance difference P2/P1 in the actual measurement result and the luminance difference P2/P1$_{sim}$ in the simulation evaluation indicate good agreement.

As illustrated in Table 1, in Example 5 that is a comparative example, since the antireflection film was formed without tilting the base material, the average transmittance of the far-infrared rays at the position P1 and the average transmittance of the far-infrared rays at the position P2 coincide with each other in the case where the far-infrared rays are emitted in the direction perpendicular to the surface on the vehicle exterior side. In Example 5, the luminance difference P2/P1 was 80%, which shows that the luminance variation in the field of view of the far-infrared camera is large and that the detection accuracy of the infrared rays may decrease.

On the other hand, as illustrated in Table 1, in Examples 1 to 4 and 6 of the present example, since the antireflection film was formed while the base material was tilted, the average transmittance of the far-infrared rays at the position P1 and the average transmittance of the far-infrared rays at the position P2 were different in the case where the far-infrared rays were emitted in the direction perpendicular to the surface on the vehicle exterior side. In Examples 1 to 4 and 6 of the present example, the luminance difference P2/P1 or P2/P1$_{sim}$ is within 90 to 110%, and it can be said that a decrease in the detection accuracy of infrared rays is suppressed.

Although the embodiments of the present invention have been described above, embodiments are not limited by the content of the embodiments. In addition, the above-described components include those that are easily conceivable by those skilled in the art, those that are substantially the same, and those in a so-called equivalent range. Furthermore, the above-described components can be combined as appropriate. Furthermore, various omissions, substitutions, or modifications in the components can be made without departing from the gist of the above-described embodiments.

Reference Signs List

| | |
|---|---|
| 1 | VEHICLE GLASS |
| 10, 12, 14 | GLASS BASE BODY |
| 16 | MIDDLE LAYER |
| 18 | LIGHT SHIELDING LAYER |
| 19 | OPENING |
| 20 | FAR-INFRARED RAY TRANSMITTING MEMBER |
| 30 | BASE MATERIAL |
| 32 | FUNCTIONAL FILM |
| 34 | ANTIREFLECTION FILM |
| 36 | FAR-INFRARED RAY ABSORBING LAYER |
| P1 | FIRST POSITION |
| P2 | SECOND POSITION |
| V | VEHICLE |

**Claims**

**1.** Vehicle glass comprising a light shielding region,

wherein a far-infrared ray transmitting region is formed in the light shielding region, the far-infrared ray transmitting region including an opening and a far-infrared ray transmitting member disposed in the opening, and

in the far-infrared ray transmitting member, an average transmittance of far-infrared rays having wavelengths of 8 $\mu$m to 13 $\mu$m at a first position in a case where the far-infrared rays are emitted in a direction perpendicular to a surface on a vehicle exterior side is different from an average transmittance of the far-infrared rays having wavelengths of 8 $\mu$m to 13 $\mu$m at a second position that is lower than the first position in a vertical direction in a case where the vehicle glass is mounted to a vehicle.

2. The vehicle glass according to claim 1, wherein, in the far-infrared ray transmitting member, the average transmittance of the far-infrared rays having wavelengths of 8 $\mu$m to 13 $\mu$m at the second position is higher than the average transmittance of the far-infrared rays having wavelengths of 8 $\mu$m to 13 $\mu$m at the first position in the case where the far-infrared rays are emitted in the direction perpendicular to the surface on the vehicle exterior side.

3. The vehicle glass according to claim 2, wherein, in the far-infrared ray transmitting member, an average transmittance of the far-infrared rays having wavelengths of 8 $\mu$m to 13 $\mu$m increases from the first position toward the second position in the case where the far-infrared rays are emitted in a direction perpendicular to the surface on the vehicle exterior side.

4. The vehicle glass according to any one of claims 1 to 3, wherein the far-infrared ray transmitting member includes a base material that transmits a far-infrared ray and a functional film formed on the base material.

5. The vehicle glass according to claim 4, wherein the functional film includes a far-infrared ray absorbing layer that absorbs the far-infrared ray, a thickness of the far-infrared ray absorbing layer decreasing from the first position toward the second position.

6. The vehicle glass according to claim 4 or 5, wherein the functional film includes an antireflection film that absorbs the far-infrared ray and suppresses reflection of the far-infrared ray, a thickness of the antireflection film decreasing from the first position toward the second position.

7. The vehicle glass according to any one of claims 1 to 6, wherein the far-infrared ray transmitting member includes a base material that absorbs a part of a far-infrared ray incident on the base material and transmits a part of the far-infrared ray, a thickness of the base material decreasing from the first position toward the second position.

8. The vehicle glass according to any one of claims 4 to 6, wherein the functional film includes an antireflection film that suppresses reflection of the far-infrared ray, a thickness of the antireflection film increasing from the first position toward the second position.

9. The vehicle glass according to claim 8, wherein the antireflection film includes lamination of a plurality of layers, and the number of laminated layers increases from the first position toward the second position.

10. The vehicle glass according to claim 8 or 9, wherein the antireflection film includes lamination of a plurality of layers, and a thickness of at least one of the layers increases from the first position toward the second position.

11. The vehicle glass according to any one of claims 4 to 10, wherein the base material contains at least one material selected from a group consisting of Si, Ge, ZnS, and chalcogenide glass.

12. The vehicle glass according to any one of claims 1 to 11, wherein, in the far-infrared ray transmitting member, a length of a longest straight line among straight lines connecting any two points on the surface on the vehicle exterior side is greater than or equal to 40 mm.

13. The vehicle glass according to any one of claims 1 to 12, wherein the far-infrared ray transmitting member has a thickness within a range of 1.5 mm to 5.5 mm.

# FIG.1

# FIG.2

# FIG.3

VEHICLE
EXTERIOR SIDE

VEHICLE
INTERIOR SIDE

# FIG.4

1

A2

C

12A

A1

18

18

12B

14B
14A

X ⊙ → Z

Y

18

12  16  14

10

VEHICLE
EXTERIOR SIDE

VEHICLE
INTERIOR SIDE

# FIG.5

# FIG.6

# FIG.7

# FIG.8

VEHICLE
EXTERIOR SIDE

VEHICLE
INTERIOR SIDE

# FIG.9

# FIG.10

VEHICLE
EXTERIOR SIDE

VEHICLE
INTERIOR SIDE

# FIG.11

VEHICLE
EXTERIOR SIDE

VEHICLE
INTERIOR SIDE

# FIG.12

20

34(32)
34A 34B
30

30a

34a
(20a)
30b
(20b)

X⊙ →Z

↓Y

VEHICLE
EXTERIOR SIDE

VEHICLE
INTERIOR SIDE

# FIG.13

# FIG.14

20

34T(32)

34A  34B

30

30a

34a
(20a)

30b
(20b)

34b

X ⊙ → Z

↓
Y

VEHICLE
EXTERIOR SIDE

VEHICLE
INTERIOR SIDE

## INTERNATIONAL SEARCH REPORT

| International application No. |
| --- |
| **PCT/JP2022/000143** |

| A. | CLASSIFICATION OF SUBJECT MATTER |
| --- | --- |

*B60J 1/00*(2006.01)i; *G02B 5/22*(2006.01)i
FI:    B60J1/00 H; G02B5/22

According to International Patent Classification (IPC) or to both national classification and IPC

| B. | FIELDS SEARCHED |
| --- | --- |

Minimum documentation searched (classification system followed by classification symbols)

G02B5/22; B60J1/00-1/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | WO 2020/017495 A1 (AGC INC) 23 January 2020 (2020-01-23)<br>paragraphs [0005], [0031]-[0035], fig. 1B, 1D | 1-13 |
| Y | GB 2271139 A (PILKINGTON PLC) 06 April 1994 (1994-04-06)<br>p. 3, line 22 to p. 6, line 23, fig. 1-4 | 1-13 |
| Y | JP 2011-195055 A (HONDA MOTOR CO LTD) 06 October 2011 (2011-10-06)<br>paragraphs [0005], [0030]-[0039], fig. 3-4 | 1-13 |
| A | Microfilm of the specification and drawings annexed to the request of Japanese Utility Model Application No. 49937/1988 (Laid-open No. 154486/1989) (NISSAN MOTOR) 24 October 1989 (1989-10-24), entire text, all drawings | 1-13 |
| A | JP 2011-51365 A (TSUCHIYA, Yohei) 17 March 2011 (2011-03-17)<br>paragraph [0007], fig. 11 | 1-13 |
| A | US 2011/0199674 A1 (MELCHER, Martin) 18 August 2011 (2011-08-18)<br>entire text, all drawings | 1-13 |

☐ Further documents are listed in the continuation of Box C.        ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 February 2022** | **01 March 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/000143**

| Patent document cited in search report | | | Publication date (day/month/year) | Patent family member(s) | | | Publication date (day/month/year) |
|---|---|---|---|---|---|---|---|
| WO | 2020/017495 | A1 | 23 January 2020 | US | 2021/0132273 | A1 | |
| | | | | paragraphs [0005], [0043]-[0047], fig. 1B, 1D | | | |
| | | | | EP | 3825742 | A1 | |
| | | | | CN | 112424654 | A | |
| GB | 2271139 | A | 06 April 1994 | (Family: none) | | | |
| JP | 2011-195055 | A | 06 October 2011 | (Family: none) | | | |
| JP | 1-154486 | U1 | 24 October 1989 | (Family: none) | | | |
| JP | 2011-51365 | A | 17 March 2011 | (Family: none) | | | |
| US | 2011/0199674 | A1 | 18 August 2011 | WO | 2010/084092 | A1 | |
| | | | | EP | 2382089 | A1 | |
| | | | | DE | 102009006062 | A1 | |
| | | | | CN | 202986244 | U | |

Form PCT/ISA/210 (patent family annex) (January 2015)

**REFERENCES CITED IN THE DESCRIPTION**

**Patent documents cited in the description**

- US 20030169491 A1

- GB 2271139 A